# EUROPEAN PATENT APPLICATION

(11) **EP 4 718 113 A1**
(43) Date of publication of application: **01.04.2026**
(21) Application number: 25161203.2
(22) Date of filing: 03.03.2025
(51) Int. Cl.: G01S 7/484, G01S 7/4865, G01S 7/4911, G01S 17/36, G01S 17/894, G01S 7/48, G01S 7/4861, G01S 7/4914, G01S 7/4915

(54) **LIGHT EMITTING DEVICE EMPLOYING TWO LIGHTING STATES AND CORRESPONDING DISTANCE MEASURING DEVICE**

(30) Priority: 26.09.2024 JP 2024167686
(71) Applicant: Fujifilm Business Innovation Corp., Tokyo 107-0052 (JP)
(72) Inventor: SAKITA, Tomoaki, Ebina (JP); SUGIBUCHI, Hiroki, Ebina (JP)
(74) Representative: Meissner Bolte Partnerschaft mbB

(57) **Abstract**

A light emitting device includes a light emitter including plural light sources each having plural light emitting sections configured to emit light individually, and a driver configured to drive the light emitter to have a first lighting state in which first light emitting sections that radiate light toward one region in at least partial light sources out of the plural light sources are lit, and to have a second lighting state in which plural light emitting sections of a predetermined light source out of the plural light sources, including the first light emitting section and a second light emitting section that radiates light toward a non-irradiation portion other than a portion of the one region that is irradiated by the first light emitting section, are lit simultaneously.

## Description

### Background

### (i) Technical Field

The present disclosure relates to a light emitting device and a distance measuring device.

### (ii) Related Art

For example, Japanese Unexamined Patent Application Publication No. 2023-112763 discloses an optical detection device including a light emitter that irradiates a region of interest, a light receiver that receives reflected light that has been radiated by the light emitter and reflected by a detection object, and that includes a plurality of light receiving elements divided into a plurality of light receiving sections. The optical detection device includes a processor that performs full irradiation for irradiating the entire region of interest and/or full light reception for outputting all light reception results, and partial irradiation for irradiating part of the region of interest and/or partial light reception for outputting part of the light reception results in sequence. The processor performs an object detection process for detecting the detection object based on light received by the light receiver. The processor performs, based on a difference between a received light amount at each light receiving section in the case where the light emitter performs the full irradiation and a received light amount at each light receiving section in the case where the light emitter performs the partial irradiation, an indirect light detection process for detecting that at least one of the plurality of light receiving sections receives indirect light when the light emitter performs the full irradiation.

### Summary

There is a light emitting device including a plurality of light sources each having a plurality of light emitting sections. It is assumed that only the light emitting section that radiates light toward one region is lit in each of the plurality of light sources. If the light emitting sections of the plurality of light sources are driven to light up only once for the one region, the effect of displacement of the light emitting sections on the one region may increase due to the accuracy of assembling of the plurality of light sources, etc.

Accordingly, it is an object of the present disclosure to reduce an effect of displacement of a plurality of light sources on one region compared with a case of drive for a lighting state in which the one region alone is irradiated.

According to a first aspect of the present disclosure, there is provided a light emitting device comprising: a light emitter including a plurality of light sources each having a plurality of light emitting sections configured to emit light individually; and a driver configured to drive the light emitter to have a first lighting state in which first light emitting sections that radiate light toward one region in at least partial light sources out of the plurality of light sources are lit, and to have a second lighting state in which a plurality of light emitting sections of a predetermined light source out of the plurality of light sources, including the first light emitting section and a second light emitting section that radiates light toward a non-irradiation portion other than a portion of the one region that is irradiated by the first light emitting section, is lit simultaneously.

According to a second aspect of the present disclosure, the light emitting device according to the first aspect further comprises a calculator configured to acquire a result of the second lighting state, and perform calculation based on the acquired result to reduce an effect of the non-irradiation portion in the first lighting state.

According to a third aspect of the present disclosure, in the light emitting device according to the first or second aspect, the number of the predetermined light sources is smaller than the number of the at least partial light sources.

According to a fourth aspect of the present disclosure, in the light emitting device according to the third aspect, the number of the predetermined light sources is one.

According to a fifth aspect of the present disclosure, in the light emitting device according to any one of the first to fourth aspects, each of the plurality of light sources includes the light emitting sections and an optical member configured to allow the light from the light emitting sections to pass, and at least either of the light emitting sections and the optical members of the plurality of light sources are the same.

According to a sixth aspect of the present disclosure, in the light emitting device according to any one of the first to fourth aspects, the driver is configured to switch drive of the light emitter to have the first lighting state and the second lighting state and drive of the light emitter to have the first lighting state and not to have the second lighting state.

According to a seventh aspect of the present disclosure, in the light emitting device according to any one of the first to fourth aspects, the predetermined light source is a plurality of light sources including a first light source and a second light source, when the first light source is in the second lighting state, the second light source is not in the second lighting state, and when the second light source is in the second lighting state, the first light source is not in the second lighting state.

According to an eighth aspect of the present disclosure, in the light emitting device according to any one of the first to fourth aspects, the plurality of light emitting sections of the predetermined light source that is lit in the second lighting state is part of the light emitting sections of the predetermined light source.

According to a ninth aspect of the present disclosure, in the light emitting device according to the first or second aspect, the one region is one of divisional regions constituting a region to be irradiated by the light emitter, and the number of times the driver drives the divisional regions to have the first lighting state is equal to or larger than the number of times the driver drives the divisional regions to have the second lighting state.

According to a tenth aspect of the present disclosure, in the light emitting device according to the ninth aspect, the divisional regions are driven once to have the second lighting state while each of the divisional regions is driven once to have the first lighting state.

According to an eleventh aspect of the present disclosure, there is provided a light emitting device comprising: a light emitter including a plurality of light sources each having a plurality of light emitting sections configured to emit light individually; and a processor configured to drive the light emitter to have a first lighting state in which first light emitting sections that radiate light toward one region in at least partial light sources out of the plurality of light sources are lit, and to have a second lighting state in which a plurality of light emitting sections of a predetermined light source out of the plurality of light sources, including the first light emitting section and a second light emitting section that radiates light toward a non-irradiation portion other than a portion of the one region that is irradiated by the first light emitting section, is lit simultaneously.

According to a twelfth aspect of the present disclosure, there is provided a light emitting device comprising: a light emitter including a plurality of light sources each having a plurality of light emitting sections configured to emit light individually, the plurality of light sources including a partial light source having a radiation angle larger than a radiation angle of another light source; and a driver configured to drive the light emitter to have a first lighting state in which a first light emitting section that radiates light toward one region in the other light source is lit, and to have a second lighting state in which at least the first light emitting section of the partial light source is lit.

According to a thirteenth aspect of the present disclosure, there is provided a distance measuring device comprising: the light emitting device according to the first, eleventh, or twelfth aspect; a light receiver configured to receive reflected light originating from the light emitting device; an acquirer configured to acquire a light reception result from the light receiver; and a distance measurer configured to measure a distance based on the light reception result acquired by the acquirer.

According to the first aspect of the present disclosure, an effect of displacement of the plurality of light sources on the one region may be reduced compared with a case of drive for a lighting state in which the one region alone is irradiated.

According to the second aspect of the present disclosure, an effect of flare caused by a high-reflectance object may be reduced more securely than in a case without the calculator configured to acquire the result of the second lighting state and perform the calculation based on the acquired result to reduce the effect of the non-irradiation portion in the first lighting state.

According to the third aspect of the present disclosure, the effect of flare caused by the high-reflectance object may be reduced more securely than in a case without the configuration in which the number of the predetermined light sources is smaller than the number of the at least partial light sources.

According to the fourth aspect of the present disclosure, the effect of flare caused by the high-reflectance object may be reduced more securely than in a case without the configuration in which the number of the predetermined light sources is one.

According to the fifth aspect of the present disclosure, the number of components may be reduced compared with a case without the configuration in which each of the plurality of light sources includes the light emitting sections and the optical member configured to allow the light from the light emitting sections to pass and at least either of the light emitting sections and the optical members of the plurality of light sources are the same.

According to the sixth aspect of the present disclosure, the versatility may be increased compared with a case without the configuration in which the driver is configured to switch the drive of the light emitter to have the first lighting state and the second lighting state and the drive of the light emitter to have the first lighting state and not to have the second lighting state.

According to the seventh aspect of the present disclosure, the temperature rise of the light source along with the second lighting state may be suppressed compared with a case without the configuration in which the predetermined light source is the plurality of light sources including the first light source and the second light source, when the first light source is in the second lighting state, the second light source is not in the second lighting state, and when the second light source is in the second lighting state, the first light source is not in the second lighting state.

According to the eighth aspect of the present disclosure, the temperature rise of the light source along with the second lighting state may be suppressed compared with a case without the configuration in which the plurality of light emitting sections of the predetermined light source that is lit in the second lighting state is part of the light emitting sections of the predetermined light source.

According to the ninth aspect of the present disclosure, the control load may be reduced compared with a case without the configuration in which the one region is one of the divisional regions constituting the region to be irradiated by the light emitter and the number of times the driver drives the divisional regions to have the first lighting state is equal to or larger than the number of times the driver drives the divisional regions to have the second lighting state.

According to the tenth aspect of the present disclosure, the control load may be reduced compared with a case without the configuration in which the divisional regions are driven once to have the second lighting state while each of the divisional regions is driven once to have the first lighting state.

According to the eleventh aspect of the present disclosure, the effect of displacement of the plurality of light sources on the one region may be reduced compared with the case of drive for the lighting state in which the one region alone is irradiated.

According to the twelfth aspect of the present disclosure, the effect of displacement of the plurality of light sources on the one region may be reduced compared with the case of drive for the lighting state in which the one region alone is irradiated.

According to the thirteenth aspect of the present disclosure, the effect of displacement of the plurality of light sources on the one region may be reduced compared with the case of drive for the lighting state in which the one region alone is irradiated.

### Brief Description of the Drawings

Exemplary embodiments of the present disclosure will be described in detail based on the following figures, wherein:
Fig. 1 is a block diagram illustrating an example of the overall configuration of a distance measuring device according to exemplary embodiments;
Fig. 2 illustrates a relationship between a light emitting surface of a light emitter and an irradiation plane irradiated with light emitted from the light emitter according to the exemplary embodiments;
Fig. 3 illustrates an example of the light emitter according to the exemplary embodiments;
Fig. 4 illustrates a relationship between a light receiving surface of a light receiver and the irradiation plane according to the exemplary embodiments;
Fig. 5 illustrates an example of the sequence of irradiation of irradiation sections of the irradiation plane;
Figs. 6A to 6C illustrate a distance image according to the exemplary embodiments, in which Fig. 6A illustrates positional relationships between the distance measuring device and target objects, Fig. 6B illustrates the state of the irradiation plane, and Fig. 6C illustrates an example of the distance image created by a controller;
Fig. 7 is a perspective view illustrating an example of the overall configuration of the distance measuring device according to the exemplary embodiments;
Figs. 8A and 8B illustrate lighting states of a plurality of light sources according to a first exemplary embodiment, in which Fig. 8A illustrates a state in which a single light emitting section is lit, and Fig. 8B illustrates a state in which a plurality of light emitting sections is lit;
Figs. 9A and 9B illustrate light amount distributions in light receiving sections of the light receiver that receives light from the plurality of light sources, in which Fig. 9A illustrates a lighting state corresponding to that in Fig. 8A, and Fig. 9B illustrates a lighting state corresponding to that in Fig. 8B;
Fig. 10 is a flowchart illustrating an example of control along with lighting of the light sources;
Figs. 11A to 11C are graphs illustrating calculation of the distance image from acquired infrared images, in which Fig. 11A illustrates a case of using scan images, Fig. 11B illustrates a case of using a flash image, and Fig. 11C illustrates a case where electric charge of the flash image is added to the scan images;
Fig. 12 is a flowchart illustrating an example of calculation;
Figs. 13A to 13D illustrate lighting modes of the plurality of light sources according to a modification, in which Figs. 13A and 13B illustrate a first lighting mode, and Figs. 13C and 13D illustrate a second lighting mode;
Figs. 14A and 14B illustrate lighting states of the light sources according to a second exemplary embodiment, in which Fig. 14A illustrates a state in which a single light emitting section is lit, and Fig. 14B illustrates a state in which a plurality of light emitting sections is lit;
Figs. 15A and 15B illustrate light amount distributions in the light receiving sections of the light receiver that receives light from the plurality of light sources, in which Fig. 15A illustrates a lighting state corresponding to that in Fig. 14A, and Fig. 15B illustrates a lighting state corresponding to that in Fig. 14B;
Fig. 16 is a flowchart illustrating an example of control along with lighting of the light sources;
Figs. 17A and 17B illustrate a first modification of the lighting pattern, in which Fig. 17A illustrates a scan-lighting state, and Fig. 17B illustrates a flash-lighting state;
Figs. 18A and 18B illustrate a second modification of the lighting pattern, in which Fig. 18A illustrates a scan-lighting state, and Fig. 18B illustrates a flash-lighting state;
Figs. 19A and 19B illustrate a third modification of the lighting pattern, in which Fig. 19A illustrates a scan-lighting state, and Fig. 19B illustrates a flash-lighting state;
Fig. 20 illustrates radiation angles of the light sources according to a third exemplary embodiment;
Fig. 21 illustrates a light amount distribution in the light receiving sections of the light receiver that receives light from the plurality of light sources; and
Figs. 22A to 22D illustrate configuration examples of the light sources including optical members, in which Figs. 22A and 22B illustrate an example in which microlenses are used as the optical members, and Figs. 22C and 22D illustrate another example in which lenses are used as the optical members.

### Detailed Description

Exemplary embodiments of the present disclosure are described in detail with reference to the accompanying drawings.

The technical scope disclosed herein is not limited to the scope described in the exemplary embodiments. It is understood, from the description of the claims, that the technical scope encompasses combinations of a plurality of examples and various modifications or revisions of the examples.

### <Distance Measuring Device 1>

### (Overall Configuration)

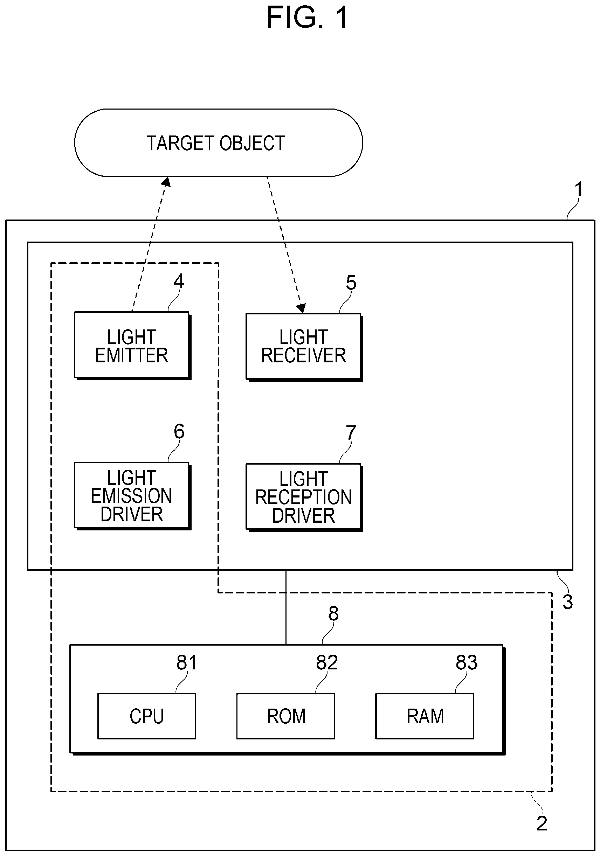

Fig. 1 is a block diagram illustrating an example of the overall configuration of a distance measuring device 1 according to the exemplary embodiments.

The distance measuring device 1 measures a distance to a target object based on a period from a timing when a light emitter 4 emits light to a timing when a light receiver 5 receives light reflected by the target object. That is, the distance measuring device 1 performs distance measurement by ToF. Examples of ToF include indirect ToF (iToF) in which the period is measured based on a difference between the phase of emitted light and the phase of received light, and direct ToF (dToF) in which the period from light emission to light reception is measured directly. In the exemplary embodiments, the distance measuring device 1 performs distance measurement by indirect ToF.

As illustrated in Fig. 1, the distance measuring device 1 includes an optical device 3 and a controller 8.

The optical device 3 includes the light emitter 4 that emits light toward a predetermined irradiation range, the light receiver 5 that receives the light emitted from the light emitter 4 and reflected by a target object in the irradiation range, a light emission driver 6 that drives the light emitter 4, and a light reception driver 7 that drives the light receiver 5.

The configurations of the light emitter 4 and the light receiver 5 of the optical device 3 are described in detail later. The reference symbol 2 indicating the broken line is described later.

The controller 8 controls operations of the light emitter 4 and the light receiver 5 of the optical device 3.

The controller 8 acquires a light reception result from the light receiver 5, and measures a distance from the distance measuring device 1 to the target object by ToF based on the light reception result.

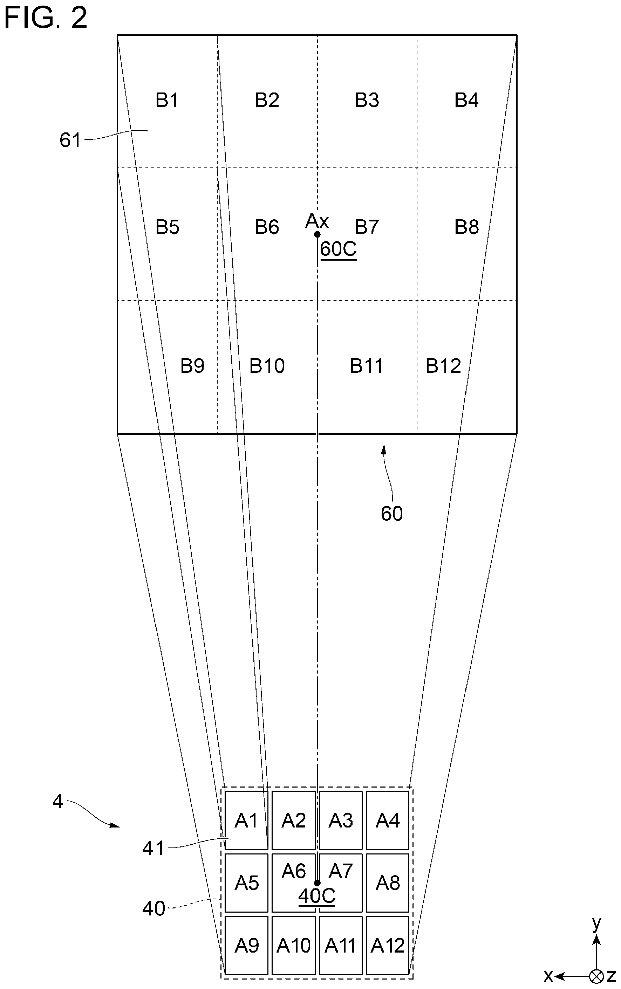

The light receiver 5 detects infrared rays radiated from the target object in the irradiation range (irradiation plane 60 described later in Fig. 2). The controller 8 generates an infrared image based on a detection result. The controller 8 generates the infrared image by detecting the infrared rays from the irradiation range continuously or intermittently at predetermined time intervals.

The controller 8 grasps the status of the target object in the irradiation range by analyzing the acquired infrared image. The controller 8 grasps, as the status of the target object in the irradiation range, whether the target object in the irradiation range is a movable object or a stationary object. The controller 8 grasps, as the status of the target object in the irradiation range, an irradiation section 61 (see Fig. 2) of the irradiation range where the target object is present. When the target object is a movable object, the controller 8 grasps, as the status of the target object in the irradiation range, a movement direction and a relative movement amount of the target object in the irradiation range.

### (Light Emitter 4)

Fig. 2 illustrates a relationship between a light emitting surface 40 of the light emitter 4 and the irradiation plane 60 irradiated with light emitted from the light emitter 4 according to the exemplary embodiments. In Fig. 2, a leftward direction on the drawing sheet is a +x direction, an upward direction on the drawing sheet is a +y direction, a far-side direction on the drawing sheet is a +z direction, and their opposite directions are -x, -y, and -z directions. In Fig. 2, the light emitting surface 40 and the irradiation plane 60 are shifted in the vertical direction (±y direction) on the drawing sheet. In actuality, the light emitting surface 40 and the irradiation plane 60 face each other. In Fig. 2, the light emitting surface 40 of the light emitter 4 is located on the near side (-z direction) on the drawing sheet, and the irradiation plane 60 is located on the far side (+z direction) on the drawing sheet. That is, in Fig. 2, the light emitter 4 that is emitting light to the irradiation plane 60 is viewed from the back side of the light emitter 4 opposite to the light emission side.

The light emitter 4 includes, for example, one or more light emitting chips.

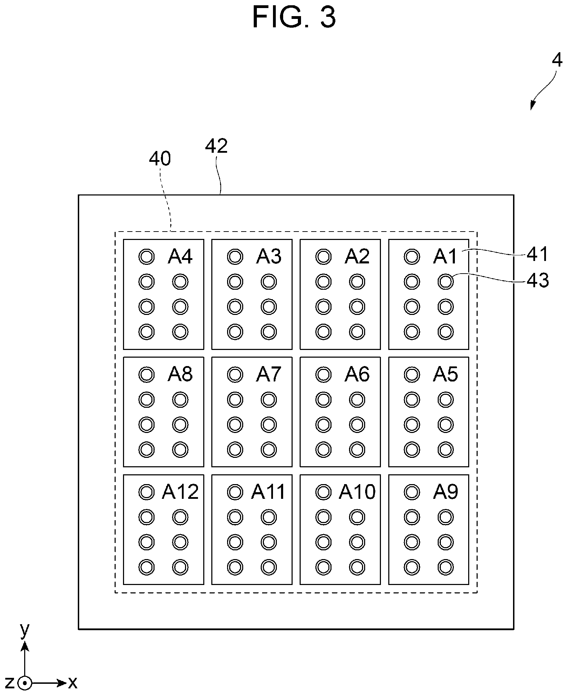

The light emitter 4 has the light emitting surface 40 where a plurality of vertical cavity surface emitting lasers (VCSELs 43 in Fig. 3) is arranged. The light emitter 4 emits light toward the irradiation plane 60 by light emission from the VCSELs 43. In Fig. 2, illustration of the VCSELs 43 is omitted.

As described later, the light emitter 4 may have a plurality of light emitting surfaces 40.

The light emitting surface 40 is divided into a plurality of light emitting sections 41 each including at least one VCSEL 43. The light emitting surface 40 is divided into, for example, a total of 12 light emitting sections 41 in which four light emitting sections 41 are arranged in the x direction and three light emitting sections 41 are arranged in the y direction. As in the illustration, the light emitting sections 41 may be distinguished as light emitting sections A1 to A12 in the order from the upper left side in Fig. 2 (corner in the +x direction and the +y direction).

The word "to" in the numbering herein means a plurality of components distinguished by numbers, including the components with numbers across the word "to" and the components with numbers therebetween. For example, the light emitting sections A1 to A12 include 12 light emitting sections 41 with numbers A1 to A12 in sequence.

The light emitting sections 41 are independently driven by the light emission driver 6 (see Fig. 1) to emit light. Each light emitting section 41 emits light with electric power supplied to the VCSELs 43 in the light emitting section 41 by the light emission driver 6. In the exemplary embodiments, the VCSELs 43 in each light emitting section 41 emit light with electric power supplied to the VCSELs 43. The amount of light emitted from each light emitting section 41 is adjustable depending on the environment such as brightness of the irradiation range, a user's operation on the distance measuring device 1, etc.

In the exemplary embodiments, the drive of the light emitting section 41 refers to light emission of the VCSELs 43 in the light emitting section 41 by power supply, and the light emitting operation refers to light emission of the VCSELs 43 in the light emitting section 41 during a predetermined light emission period.

The term "independent drive" refers to drive of the individual light emitting sections 41 to emit light. The light emission driver 6 drives each light emitting section 41 in response to a control signal from the controller 8 (see Fig. 1). All the light emitting sections 41 need not emit light simultaneously. In the example of Fig. 2, there is a possibility that the light emitting section A1 emits light and the light emitting section A12 does not emit light.

The irradiation plane 60 is a plane that is orthogonal to a direction in which light is emitted (+z direction) from a center 40C of the light emitting surface 40 at a certain distance in the light emission direction, and that is irradiated with light from the light emitter 4.

In the example of Fig. 2, the light emitter 4 emits light in the +z direction. Therefore, the irradiation plane 60 extends in the x direction and the y direction at a certain distance in the +z direction. A central axis Ax (two-dot chain line) passing through a center 60C of the irradiation plane 60 and the center 40C of the light emitting surface 40 is perpendicular to the light emitting surface 40 and the irradiation plane 60. In the exemplary embodiments, the irradiation plane 60 has a rectangular shape in conjunction with the rectangular shape of the light emitting surface 40.

As in the illustration, the irradiation plane 60 is divided into a plurality of irradiation sections 61 in conjunction with the light emitting sections 41 of the light emitting surface 40. In the example of Fig. 2, the irradiation plane 60 is divided into 12 irradiation sections 61 in which four irradiation sections 61 are arranged in the x direction and three irradiation sections 61 are arranged in the y direction. The irradiation sections 61 may be distinguished as irradiation sections B1 to B12 in the order from the upper left side in Fig. 2 (corner in the +x direction and the +y direction).

A light emitting section Ai with the same number "i" as a certain irradiation section Bi may be referred to as "corresponding light emitting section." For example, the light emitting section A1 is a light emitting section corresponding to the irradiation section B1. An irradiation section Bi with the same number "i" as a certain light emitting section Ai may be referred to as "corresponding irradiation section."

The irradiation sections B1 to B12 are arranged with plane symmetry to the light emitting sections A1 to A12 in terms of an xy plane. For example, in Fig. 2, the light emitting sections A1, A2, A3, and A4 are arranged in this order in the -x direction, and the irradiation sections B1, B2, B3, and B4 are arranged in this order in the -x direction.

Each light emitting section 41 emits light toward the corresponding irradiation section 61. Each irradiation section 61 is irradiated with the light emitted from the corresponding light emitting section 41. The description "the light emitting section 41 emits light toward the corresponding irradiation section 61" means that the optical axis of the light emitted from each light emitting section 41 is oriented to the corresponding irradiation section 61. This does not necessarily mean that all the light emitted from the light emitting section 41 is radiated to the corresponding irradiation section 61. In other words, part of the light emitted from a certain light emitting section 41 may be radiated to an irradiation section 61 different from the corresponding irradiation section 61 or to the outside of the range of the irradiation plane 60.

Fig. 3 illustrates an example of the light emitter 4 according to the exemplary embodiments. In Fig. 3, the light emitter 4 is viewed from the light emission side contrary to Fig. 2. Therefore, a rightward direction on the drawing sheet of Fig. 3 is the +x direction, an upward direction on the drawing sheet is the +y direction, and a near-side direction on the drawing sheet is the +z direction.

As illustrated in Fig. 3, the light emitter 4 includes a substrate 42 and the light emitting surface 40 including a plurality of VCSELs 43. More specifically, the substrate 42 and the light emitting surface 40 overlap each other in the light emission direction (+z direction, near-side direction on the drawing sheet). Although wiring for power supply or electric signal exchange, electronic components related to operation of the light emitter 4, etc. may be formed on or attached to the substrate 42, illustration is omitted.

As described above, the light emitter 4 includes the 12 light emitting sections 41 (light emitting sections A1 to A12) including the VCSELs 43 arranged on the light emitting surface 40. As illustrated in Fig. 3, all the light emitting sections A1 to A12 have the same area. The light emitting sections A1 to A12 have the same number of VCSELs 43 (seven in this example).

The area of each light emitting section 41 and the number of VCSELs 43 are not limited. Part or all of the light emitting sections 41 may have different areas or different numbers of VCSELs 43.

The light emitted from each light emitting section 41 of the light emitter 4 is radiated to the irradiation plane 60 while being expanded over a plane perpendicular to the light emission direction (direction of the central axis Ax) by a radiation lens (not illustrated). The radiation lens may be an optical member such as a diffuser that is provided on an optical path and diffuses light by scattering etc., a diffractive optical element (DOE) that changes the angle of incident light and emits the light, and/or a lens.

### (Light Receiver 5)

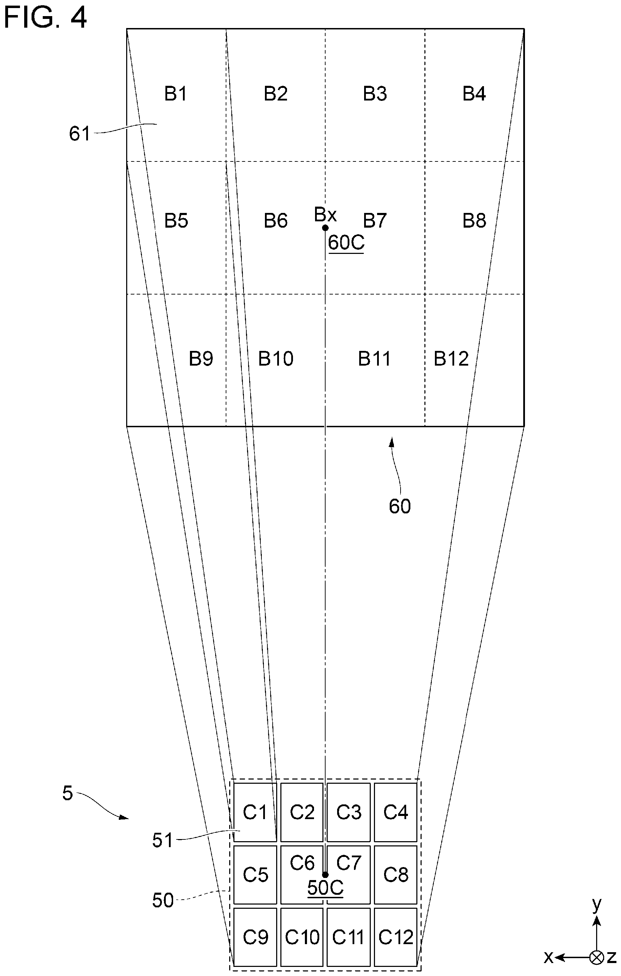

Fig. 4 illustrates a relationship between a light receiving surface 50 of the light receiver 5 and the irradiation plane 60 according to the exemplary embodiments. In Fig. 4, a leftward direction on the drawing sheet is the +x direction, an upward direction on the drawing sheet is the +y direction, a far-side direction on the drawing sheet is the +z direction, and their opposite directions are the -x, -y, and -z directions as in Fig. 2. In Fig. 4, the light receiving surface 50 and the irradiation plane 60 are shifted in the vertical direction (±y direction) on the drawing sheet. In actuality, the light receiving surface 50 and the irradiation plane 60 face each other. In Fig. 4, the light receiver 5 (light receiving surface 50) is located on the near side (-z direction) on the drawing sheet, and the irradiation plane 60 is located on the far side (+z direction) on the drawing sheet. That is, in Fig. 4, the light receiver 5 that receives light reflected from the irradiation plane 60 is viewed from the back side of the light receiver 5 opposite to the light reception side.

The light receiver 5 has the light receiving surface 50 extending in the x direction and the y direction and including a plurality of light receiving elements (not illustrated). The light receiver 5 receives, with the light receiving elements, light emitted from the light emitter 4 and reflected by a target object in the irradiation plane 60.

A central axis Bx (two-dot chain line) passing through the center 60C of the irradiation plane 60 and a center 50C of the light receiving surface 50 is perpendicular to the irradiation plane 60 and the light receiving surface 50. In the exemplary embodiments, the light receiving surface 50 has a rectangular shape similarly to the light emitting surface 40 (see Fig. 2) and the irradiation plane 60.

The light receiving surface 50 is divided into a plurality of light receiving sections 51 in conjunction with the light emitting sections 41 (see Fig. 2) of the light emitting surface 40 (see Fig. 2) and the irradiation sections 61 of the irradiation plane 60. In the example of Fig. 4, the light receiving surface 50 is divided into 12 light receiving sections 51 in which four light receiving sections 51 are arranged in the x direction and three light receiving sections 51 are arranged in the y direction. The light receiving sections 51 may be distinguished as light receiving sections C1 to C12 in the order from the upper left side in Fig. 4 (corner in the +x direction and the +y direction).

A light receiving section Ci with the same number "i" as a certain light emitting section Ai or a certain irradiation section Bi may be referred to as "corresponding light receiving section." For example, the light receiving section C1 is a light receiving section corresponding to the light emitting section A1 or the irradiation section B1. A light emitting section Ai with the same number as a certain light receiving section Ci may be referred to as "corresponding light emitting section" and an irradiation section Bi with the same number as a certain light receiving section Ci may be referred to as "corresponding irradiation section."

The light receiving sections C1 to C12 are arranged with plane symmetry to the irradiation sections B1 to B12 in terms of the xy plane. For example, in Fig. 4, the irradiation sections B1, B2, B3, and B4 are arranged in this order in the -x direction, and the light receiving sections C1, C2, C3, and C4 are arranged in this order in the -x direction.

Each light receiving section 51 receives light emitted from the light emitter 4 and reflected by a target object in the corresponding irradiation section 61.

Each light receiving section 51 includes a plurality of light receiving elements arranged in a regular pattern. Each light receiving element may receive light emitted from the light emitter 4 and reflected by a target object in the irradiation plane 60, and output an electric signal based on the received light. Examples of the light receiving element include a photodiode and a phototransistor.

The light receiving sections 51 are independently driven by the light reception driver 7 (see Fig. 1) to receive light. The drive of the light receiving section 51 refers to a state in which the light receiving section 51 may accumulate electric charge in response to light reception of the light receiving element, and the light receiving operation refers to accumulation of electric charge in response to light reception of the light receiving element of the light receiving section 51. The term "independent drive" refers to drive of the individual light receiving sections 51 to accumulate electric charge in response to light reception. The light reception driver 7 drives each light receiving section 51 in response to a control signal from the controller 8 (see Fig. 1).

In response to a reading operation of the controller 8 (detailed later), the light receiver 5 outputs, to the controller 8, electric charge accumulated in the light receiving sections 51, that is, an electric signal corresponding to a light reception result in the light receiving section 51.

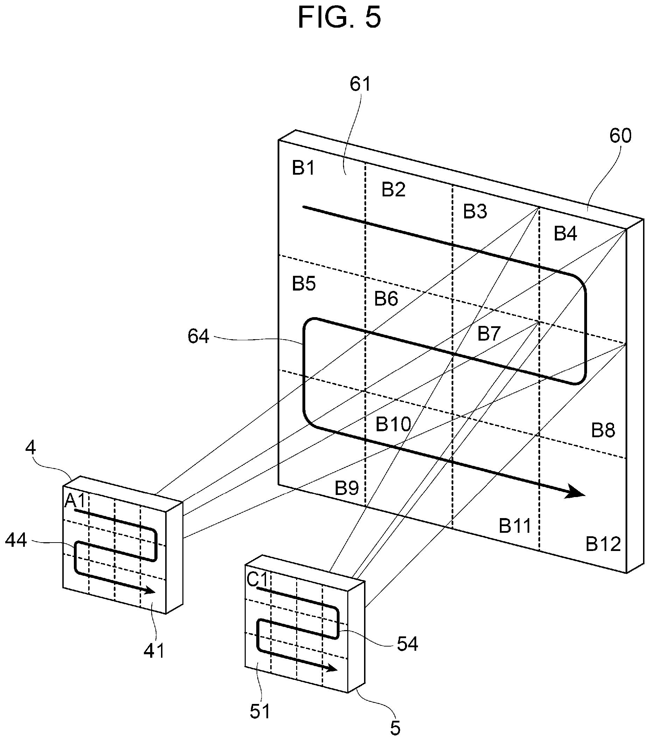

Fig. 5 illustrates an example of the sequence of irradiation of the irradiation sections 61 of the irradiation plane 60.

In the example of the sequence illustrated in Fig. 5, the irradiation sections 61 are sequentially irradiated in a direction of an arrow 64. That is, when the irradiation sections 61 are divided into upper, middle, and lower stages, the upper-stage irradiation sections B1 to B4, the middle-stage irradiation sections B5 to B8, and the lower-stage irradiation sections B9 to B12 are irradiated in this sequence. In the upper stage, the irradiation sections B1 to B4 are irradiated in this sequence. In the middle stage, the direction is opposite to that in the upper stage, and the irradiation sections B8 to B5 are irradiated in this sequence. In the lower stage, the direction is the same as that in the upper stage, and the irradiation sections B9 to B12 are irradiated in this sequence.

The light emitting sections 41 of the light emitter 4 are driven to emit light in the sequence of an arrow 44 so that the irradiation sections 61 are irradiated in the sequence of the arrow 64. The light receiving sections 51 of the light receiver 5 are driven to receive light reflected from the irradiation sections 61 in the sequence of an arrow 54 corresponding to the arrow 64.

### (Controller 8)

Referring back to Fig. 1, the controller 8 includes a central processing unit (CPU) 81, a read only memory (ROM) 82, and a random access memory (RAM) 83.

The CPU 81 is an example of a processor, and implements functions described later by loading various programs stored in the ROM 82 etc. on the RAM 83 and executing the programs. The RAM 83 is used as a working memory for the CPU 81, etc. The ROM 82 stores various programs to be executed by the CPU 81, etc.

The programs to be executed by the CPU 81 may be provided by being stored in a computer readable recording medium such as a magnetic recording medium (magnetic tape, magnetic disk, etc.), an optical recording medium (optical disc etc.), a magneto-optical recording medium, or a semiconductor memory. The programs to be executed by the CPU 81 may be provided by communication means such as the Internet.

In the exemplary embodiments, processes are performed by any computer. The any computer may perform the processes by a hardware processor, a software program, or a combination thereof. In this case, the processor may cooperate with the program to perform various processes in the exemplary embodiments or function as units or means in the exemplary embodiments. The order of the processes of the processor is not limited to the described order, and may be changed as appropriate. The any computer may be a general-purpose computer, a specific-purpose computer, a workstation, or any other system that may perform the processes.

The processor may be one or more pieces of hardware, and the type of the hardware is not limited. For example, the processor may be hardware such as a central processing unit (CPU), a micro processing unit (MPU), a programmable logic device such as a field programmable gate array (FPGA), a dedicated circuit such as an application specific integrated circuit (ASIC) that performs specific processes, a graphic processing unit (GPU), or a neural processing unit (NPU). The hardware may be a combination of different types of hardware. If a plurality of pieces of hardware is configured to perform one or more processes of a certain processor, the plurality of pieces of hardware may be inside devices located physically apart from each other or may be inside the same device. In any of the exemplary embodiments, the order of the processes of the processor is not limited to the above order, and may be changed as appropriate. The hardware is electric circuitry including circuit elements such as semiconductor elements in combination.

The program may be firmware or software such as microcode. The program may be, for example, a group of program modules, and their functions may be implemented by a processor configured to perform the functions. The program may be a program code or a plurality of code segments stored in one or more non-transitory computer readable media (e.g., storage media or other storages). The program may be stored separately in a plurality of non-transitory computer readable media inside devices located physically apart from each other. The program code or the code segments may represent any combination of procedures, functions, subprograms, routines, subroutines, modules, software packages, classes, commands, data structures, or program statements. The program code or the code segments may be connected to other code segments or hardware circuits by transmitting and receiving information, data, arguments, parameters, or memory contents.

The controller 8 controls the light emitting operation of the light emitter 4 through the light emission driver 6 and the light receiving operation of the light receiver 5 through the light reception driver 7.

The controller 8 performs the reading operation on the light receiver 5 through the light reception driver 7. The "reading operation" is an operation of the controller 8 for controlling the light receiver 5 through the light reception driver 7 to output an electric signal corresponding to a light reception result of the light receiving elements of each light receiving section 51, thereby acquiring the light reception result in each light receiving section 51. The controller 8 according to the exemplary embodiments may independently perform the reading operation on the light receiving sections 51. For example, when a certain light receiving section Ci and another light receiving section Cj receive light to accumulate electric charge, the controller 8 may perform the reading operation on the light receiving section Ci alone as well as both the light receiving section Ci and the light receiving section Cj.

The controller 8 performs distance measurement on the irradiation sections 61 based on light reception results in the light receiving sections 51. The controller 8 collects distance measurement results in the irradiation sections 61, and creates a distance image showing a distance between the distance measuring device 1 and a target object. More specifically, the controller 8 performs a predetermined arithmetic process on four electric signals acquired from the light receiver 5 as results of light reception performed four times in each light receiving section 51. In this way, the controller 8 calculates (measures) the distance between the distance measuring device 1 and the target object in each irradiation section 61 of the irradiation plane 60, and creates the distance image.

### <Distance Image 100>

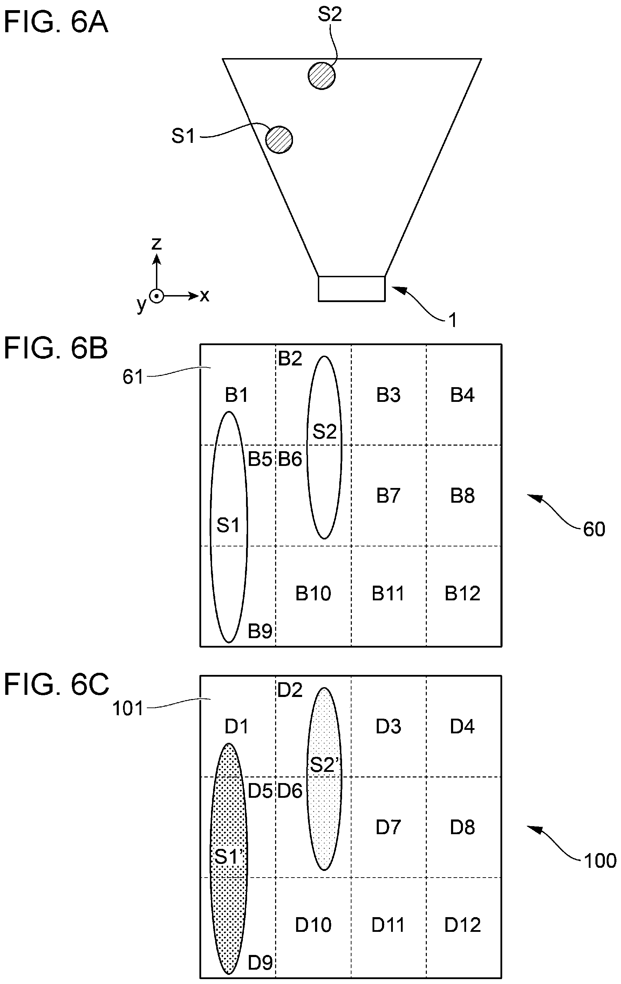

Figs. 6A to 6C illustrate a distance image 100 according to the exemplary embodiments. Fig. 6A illustrates positional relationships between the distance measuring device 1 and target objects S1 and S2. Fig. 6B illustrates the state of the irradiation plane 60. Fig. 6C illustrates an example of the distance image 100 created by the controller 8.

The distance image 100 illustrated in Fig. 6C is created as a result of distance measurement on all the irradiation sections 61 of the irradiation plane 60. In the example of Figs. 6A to 6C, it is assumed that the target objects S1 and S2 (may be referred to as "target objects S" without distinction) are stationary and the positions relative to the distance measuring device 1 do not change at least during a period from start to end of distance measurement for creating the distance image 100 in the distance measuring device 1.

As illustrated in Fig. 6C, the distance image 100 includes a plurality of image sections 101 corresponding to the light emitting sections 41 of the light emitting surface 40, the irradiation sections 61 of the irradiation plane 60, and the light receiving sections 51 of the light receiving surface 50 (see Figs. 2 and 4). In the example of Fig. 6C, the distance image 100 includes 12 image sections 101 in which four image sections 101 are arranged in a lateral direction in Fig. 6C corresponding to the ±x direction for the irradiation plane 60 and the light receiving surface 50 and three image sections 101 are arranged in a vertical direction in Fig. 6C corresponding to the ±y direction. The image sections 101 may be distinguished as image sections D1 to D12 in the order from the upper left side in Fig. 6C.

An image section Di of the distance image 100 is an image obtained based on light emitted from a light emitting section Ai of the light emitting surface 40, reflected by the target object in an irradiation section Bi of the irradiation plane 60, and received by a light receiving section Ci of the light receiving surface 50. The image section Di with the same number "i" as the light emitting section Ai, the irradiation section Bi, and the light receiving section Ci may be referred to as "corresponding image section." The light emitting section Ai with the same number "i" as the image section Di may be referred to as "corresponding light emitting section." The irradiation section Bi with the same number "i" as the image section Di may be referred to as "corresponding irradiation section." The light receiving section Ci with the same number as the image section Di may be referred to as "corresponding light receiving section."

Each image section 101 of the distance image 100 has a plurality of pixels (not illustrated) associated with the plurality of light receiving elements of the corresponding light receiving section 51. In the distance image 100, the pixel value of each pixel of the image section 101 corresponds to the distance from the distance measuring device 1 to the target object that is calculated based on the electric signal from each light receiving element of the light receiving section 51.

In the example illustrated in Fig. 6A, the target objects S1 and S2 are located at certain distances apart from the distance measuring device 1. As illustrated in Fig. 6B, the target object S1 of this example is present in a range including the irradiation sections B1, B5, and B9 of the irradiation plane 60, and the target object S2 is present in a range including the irradiation sections B2 and B6. The distance from the distance measuring device 1 to the target object S1 (e.g., 1 m) is smaller than the distance from the distance measuring device 1 to the target object S2 (e.g., 3 m).

As illustrated in Fig. 6C, an image S1' showing the target object S1 and an image S2' showing the target object S2 (may be referred to as "images S'" without distinction) are rendered in the distance image 100 by the pixels in each image section 101. More specifically, the image S1' is rendered over the image sections D1, D5, and D9 of the distance image 100 corresponding to the irradiation sections B1, B5, and B9, and the image S2' is rendered over the image sections D2 and D6 of the distance image 100 corresponding to the irradiation sections B2 and B6.

In this example, information on the distance from the distance measuring device 1 to the target object S1 and the distance from the distance measuring device 1 to the target object S2 may be obtained based on the pixel values of the pixels constituting the image S1' and the image S2' in the distance image 100 (shaded in Fig. 6C).

The distance image 100 includes information on the distance between each point on the surface of the target object S and the distance measuring device 1, and may therefore be regarded as including information on the three-dimensional shape of the target object S. Thus, the distance measuring device 1 according to the exemplary embodiments is also applicable to three-dimensional measurement.

### <Example of Overall Configuration of Distance Measuring Device 1>

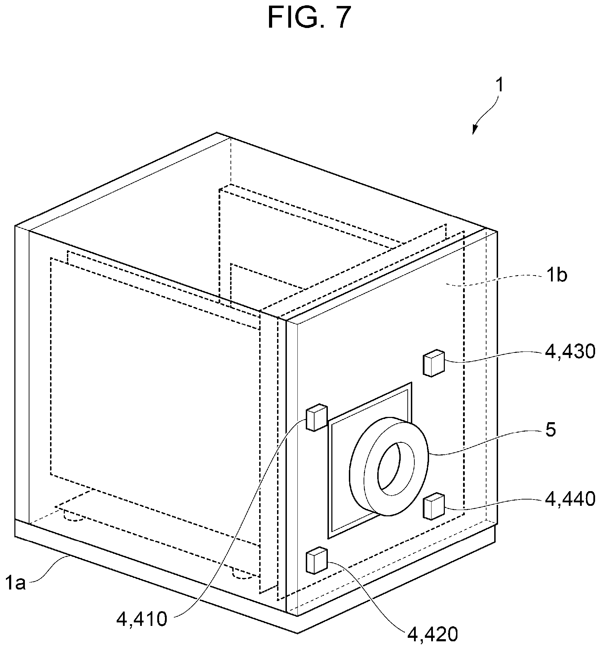

Fig. 7 is a perspective view illustrating an example of the overall configuration of the distance measuring device 1 according to the exemplary embodiments.

The distance measuring device 1 illustrated in Fig. 7 includes at least a housing 1a and a printed board 1b housed in the housing 1a. In Fig. 7, illustration of part of the housing 1a is omitted.

The light emitter 4 and the light receiver 5 constituting the optical device 3 are mounted on the printed board 1b. The CPU 81, the ROM 82, and the RAM 83 (see Fig. 1) constituting the controller 8 are also mounted on the printed board 1b.

In the configuration example illustrated in Fig. 7, the light emitter 4 includes four light sources 410, 420, 430, and 440. Each of the light sources 410 to 440 has the light emitting surface 40 (e.g., Fig. 3) divided into the plurality of light emitting sections 41. The light sources 410 to 440 are disposed around the light receiver 5.

Although the four light sources 410 to 440 are provided in the example of Fig. 7, the number of light sources may be different from four as long as a plurality of light sources is provided. For example, two, three, or five light sources may be provided.

When the light emitter 4 includes the plurality of light sources 410 to 440, it is assumed that, for example, the irradiation section B1 out of the irradiation sections B1 to B12 of the irradiation plane 60 (e.g., Fig. 2) is irradiated with light from the light emitting sections A1 of the plurality of light sources 410 to 440. When light is radiated from the light emitting sections A1 of the plurality of light sources 410 to 440, the irradiation section B1 (see Fig. 2) may be irradiated at a higher energy density than in a case where light is radiated from the light emitting section A1 of any one of the light sources, for example, the light source 410. When the irradiation section B1 is irradiated with light from the light emitting sections A1 of the plurality of light sources 410 to 440, the light exposure period of the light receiving elements (not illustrated) of the light receiving section C1 of the light receiver 5 (see Fig. 4) is reduced and capture of a global component that is background light may be suppressed. Therefore, outdoor long-distance measurement may be performed.

Due to assembling variations etc., it is difficult to match the irradiation area of, for example, the irradiation section 61 (e.g., Fig. 2) of the irradiation plane 60 irradiated with the plurality of light sources 410 to 440 and the light receiving area of the light receiving section 51 corresponding to the irradiation section 61. Therefore, the distance measurement deviation may increase when the irradiation section 61 has a non-irradiation area and accordingly the light receiving section 51 has a non-exposure area.

The exemplary embodiments provide a configuration for eliminating the non-irradiation area when the predetermined irradiation section 61 (e.g., Fig. 2) is irradiated by the plurality of light sources 410 to 440 to reduce the distance measurement deviation due to the non-irradiation area. This configuration is described below.

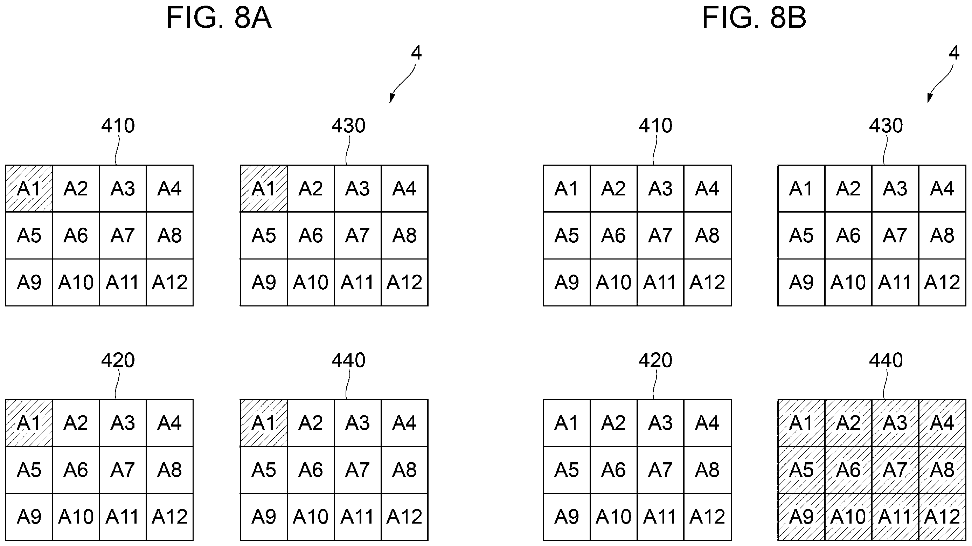

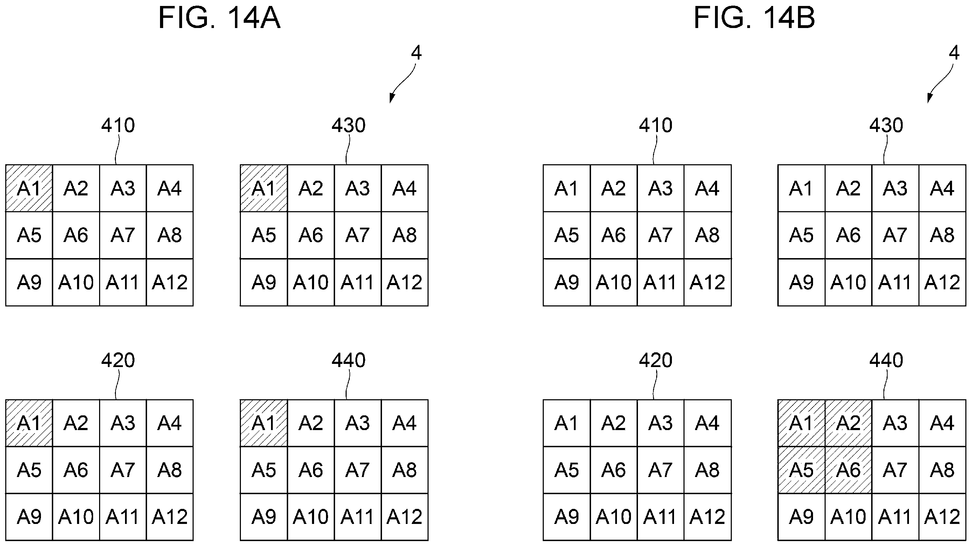

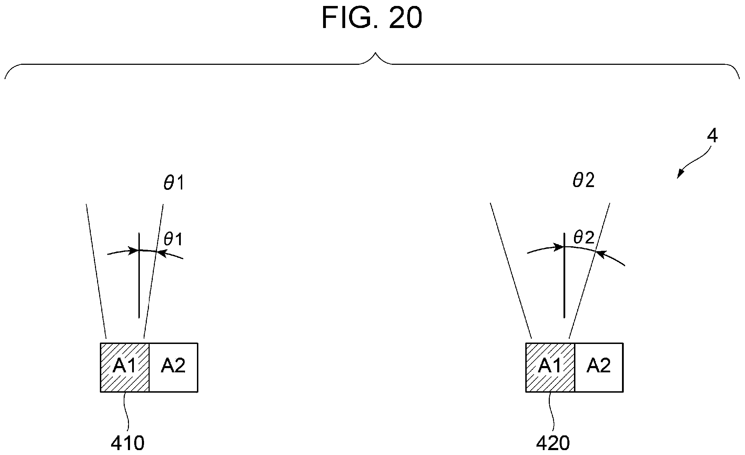

Various exemplary embodiments are described about the irradiation configuration for eliminating the non-irradiation area. A first exemplary embodiment is described with reference to Figs. 8A to 13D. A second exemplary embodiment is described with reference to Figs. 14A to 19B. A third exemplary embodiment is described with reference to Figs. 20 to 22D.

### <First Exemplary Embodiment>

The first exemplary embodiment is described.

### <Lighting States of Light Sources 410 to 440>

Figs. 8A and 8B illustrate lighting states of the plurality of light sources 410 to 440 according to the first exemplary embodiment. Fig. 8A illustrates a state in which the single light emitting section A1 is lit. Fig. 8B illustrates a state in which the plurality of light emitting sections A1 to A12 is lit.

In the lighting state illustrated in Fig. 8A, the light emitting sections A1 of the light sources 410 to 440 are lit. That is, all of the four light sources 410 to 440 are lit (quadruple lighting). The single light emitting section A1 is lit, and the other light emitting sections A2 to A12 are not lit.

In the lighting state illustrated in Fig. 8B, the light source 440 out of the light sources 410 to 440 is lit. That is, the single light source 440 out of the four light sources 410 to 440 is lit, and the other light sources 410 to 430 are not lit (single lighting). In the light source 440, the light emitting sections A1 to A12 are lit.

The lighting state illustrated in Fig. 8A is an example of a first lighting state. The light sources 410 to 440 are an example of at least partial light sources out of the plurality of light sources. The light emitting section A1 is an example of a first light emitting section that radiates light toward one region.

The lighting state illustrated in Fig. 8B is an example of a second lighting state. The light source 440 is an example of a predetermined light source out of the plurality of light sources. The light emitting section A1 is an example of the first light emitting section. The light emitting sections A2 to A12 are an example of a second light emitting section. The light emitting sections A1 to A12 are an example of the plurality of light emitting sections.

In the light emitter 4, the light source 440 comes into the first lighting state illustrated in Fig. 8A and the second lighting state illustrated in Fig. 8B. The light sources 410 to 430 come into the first lighting state illustrated in Fig. 8A and do not come into the second lighting state illustrated in Fig. 8B. The drive for these lighting states is performed by the light emission driver 6 (see Fig. 1).

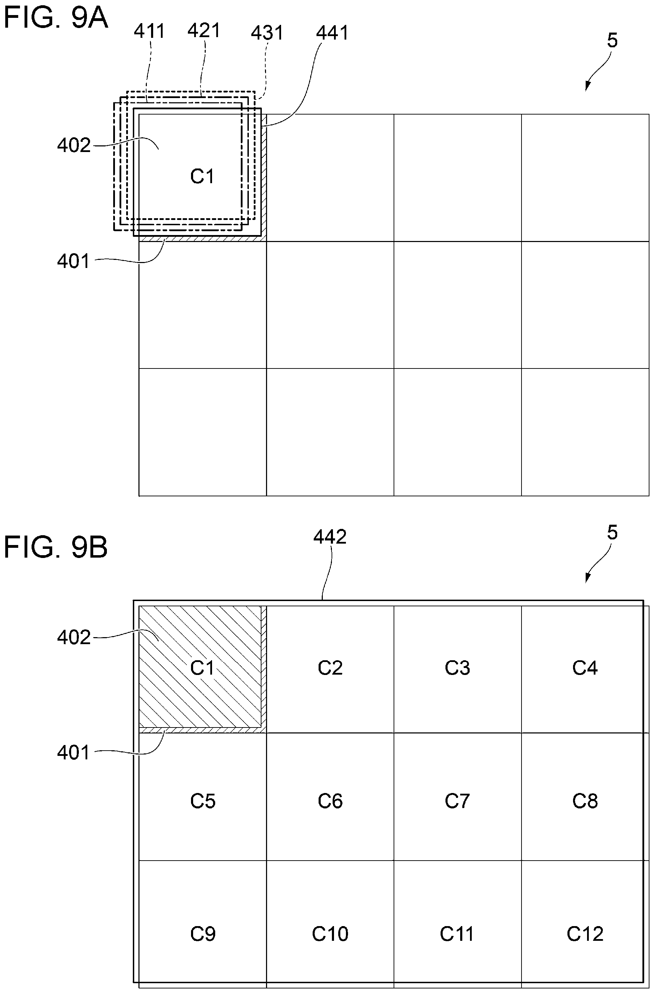

Figs. 9A and 9B illustrate light amount distributions in the light receiving sections of the light receiver 5 that receives light from the plurality of light sources 410 to 440. Fig. 9A illustrates a lighting state corresponding to that in Fig. 8A. Fig. 9B illustrates a lighting state corresponding to that in Fig. 8B.

Although Figs. 9A and 9B illustrate the light receiving section C1 etc., they may be regarded as the irradiation section B1 (see Fig. 4) etc. In this case, the irradiation section B1 is an example of one region, and the irradiation sections B2, B5, and B6 corresponding to the light receiving sections C2, C5, and C6 are an example of a region adj acent to the one region. Regions 411 to 431 described later are an example of a radiation range of the first light emitting section of another light source. A region 441 is an example of a radiation range of the first light emitting section of the partial light source.

In the example illustrated in Fig. 9A, the light from the light sources 410 to 440 (e.g.,

Figs. 8A and 8B) is received while being displaced to the upper left side relative to the light receiving section C1 due to the assembling variations etc. The light from the light source 410 is in the region 411 indicated by a two-dot chain line. The light from the light source 420 is in the region 421 indicated by a chain line. The light from the light source 430 is in the region 431 indicated by a broken line. The light from the light source 440 is in the region 441 indicated by a solid line.

The light receiving section C1 has a region 401 (hatched with upward diagonal lines) that is not exposed to any light beams from the light sources 410 to 440.

In the example illustrated in Fig. 9B, the light from the light source 440 is in a region 442. The region 401 of the light receiving section C1 is irradiated with the light from the light emitting sections A2, A5, and A6 of the light source 440 (see Fig. 8B).

The region 401 of the light receiving section C1 is an example of a non-irradiation portion other than the portion of the one region that is irradiated by the first light emitting section.

Focusing on the light receiving section C1, the light receiving section C1 is divided into the upwardly hatched region 401 exposed to the light of the region 442 of the light source 440, and a downwardly hatched region 402 exposed to the light of the regions 411 to 441 of the light sources 410 to 440.

Thus, the region 401 is not exposed to the light of the regions 411 to 441 of the light sources 410 to 440, but is exposed to the light of the region 442 of the light source 440. Accordingly, the light receiving section C1 does not have a region that is not exposed to any light beams from the light sources 410 to 440 due to the assembling variations etc.

### <Control Example>

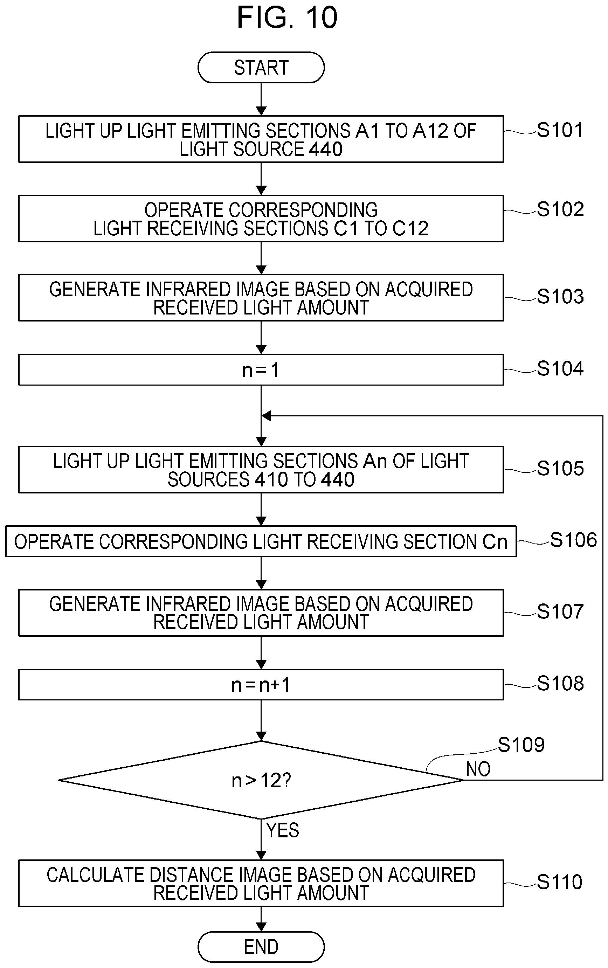

Fig. 10 is a flowchart illustrating an example of control along with lighting of the light sources 410 to 440. This control is performed by the controller 8 (see Fig. 1).

In the control example illustrated in Fig. 10, the light emitting sections A1 to A12 of the light source 440 (see Fig. 8B) are lit (Step S101). The corresponding light receiving sections C1 to C12 (see Fig. 9B) are operated (Step S102). Thus, an infrared image 100 (see Fig. 6C) is generated based on the acquired received light amount (Step S103). The infrared image 100 may be referred to as "distance image 100."

The infrared image 100 acquired in Step S103 may be referred to as "flash image." The light emission and reception for acquiring the "flash image" may be referred to as "flashing."

A variable n is set to "1" (Step S104). Then, light emitting sections An of the light sources 410 to 440 are lit (Step S105). In this case, the light emitting sections A1 of the light sources 410 to 440 are lit (see Fig. 8A). A corresponding light receiving section Cn, that is, the light receiving section C1 (see Fig. 9A), is operated (Step S106). Thus, an infrared image 100 (see Fig. 6C) during the lighting of the light emitting sections A1 is generated based on the acquired received light amount (Step S107).

A value "1" is added to the variable n (Step S108). Determination is made as to whether the variable n has exceeded "12" (Step S109). When the variable n has not exceeded "12" (NO in Step S109), the process returns to Step S105. For example, when the variable n is "2," the light emitting sections A2 of the light sources 410 to 440 are lit (e.g., Fig. 8A). Until the variable n changes from "3" to "12," the light emitting sections An of the light sources 410 to 440 are lit and the corresponding light receiving section Cn is operated.

By sequentially lighting the light emitting sections A1 to A12 of the light sources 410 to 440 and operating the corresponding light receiving sections C1 to C12, the respective infrared images 100 are acquired. The sequentially acquired infrared images 100 may be referred to as "scan images." The light emission and reception for acquiring the "scan image" may be referred to as "scanning."

When the variable n has exceeded "12" (YES in Step S109), a distance image is calculated based on the acquired received light amount (Step S110). Then, the process is terminated.

In this calculation, the flash image is added to the scan images. If the scan image has the region 401 (e.g., Fig. 9A) that is not irradiated during the scanning, the region 401 may be reduced and the S/N ratio is improved.

In the control example illustrated in Fig. 10, the drive for the second lighting state is performed once while the plurality of light sources 410 to 440 is driven once for the first lighting state. That is, the drive for the second lighting state is performed once every time the drive for the first lighting state is performed 12 times. Thus, the number of driving operations for the second lighting state may be reduced and the control load is reduced.

In another control example, the first lighting state and the second lighting state may be repeated alternately. In another control example, the drive for the second lighting state may be performed once after the drive for the first lighting state is performed multiple times. There is no limitation as to which of the first lighting state and the second lighting state comes first.

As described above, the region 401 in the light receiving section C1 may be reduced by the flash image (see Fig. 9B), and the regions 401 in the other light receiving sections C2, C3, and C5 to C7 may be reduced by the flash image (see Fig. 9B). There is a possibility that the regions 401 in the other light receiving sections C4, C8, and C9 to C12 are not reduced by the flash image. However, the light receiving sections C4, C8, and C9 to C12 are located on the outer edges of the light receiver 5, and the effect on the distance image is smaller than that in the central portion of the light receiver 5.

The calculation of the distance image from the acquired infrared images (see Step S110 in Fig. 10) is described.

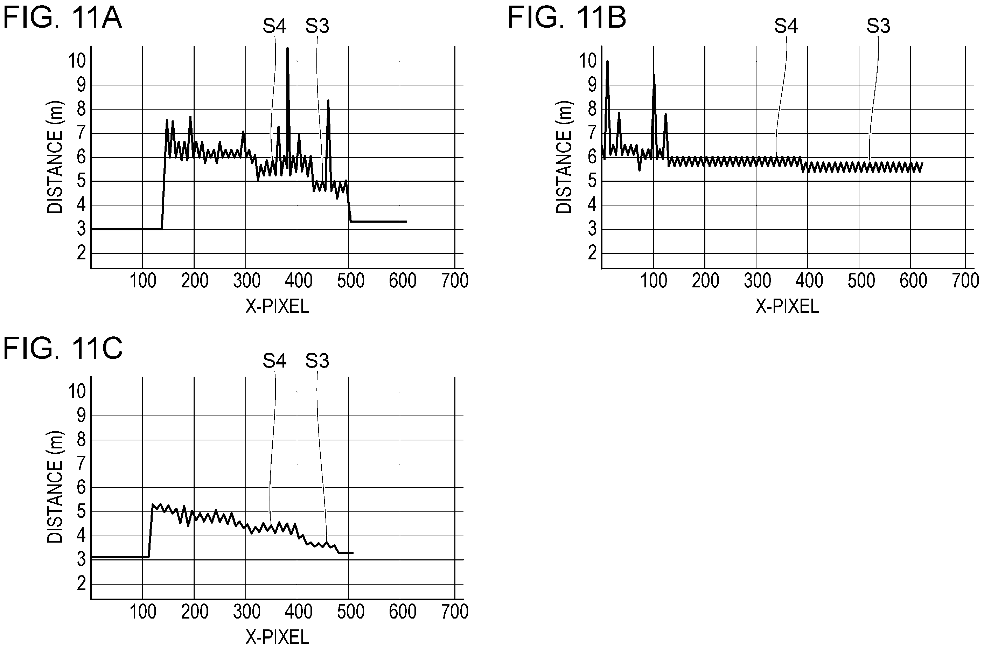

Figs. 11A to 11C are graphs illustrating the calculation of the distance image from the acquired infrared images. Fig. 11A illustrates a case of using the scan images. Fig. 11B illustrates a case of using the flash image. Fig. 11C illustrates a case where electric charge of the flash image is added to the scan images.

Figs. 11A to 11C illustrate averages for several frames. The vertical axis represents a distance (m), and the horizontal axis represents an X-pixel indicating a position.

As an example, distance measurement is performed on target objects S3 and S4. The target objects S3 and S4 are located on the right side of the irradiation plane 60 (e.g., Fig. 2), and a high-reflectance object is located at the left end.

In the scan images illustrated in Fig. 11A, an effect of flare caused by the high-reflectance object is observed at the positions of the target objects S3 and S4.

In the flash image illustrated in Fig. 11B, the effect of flare caused by the high-reflectance object is observed at the left end where the high-reflectance object is located, and is not observed at the positions of the target objects S3 and S4.

Fig. 11C illustrates an image obtained by adding 25% of the electric charge of the flash image in Fig. 11B to the scan images in Fig. 11A. In the image illustrated in Fig. 11C, the non-irradiation region may be reduced by adding the flash image to the scan images.

As illustrated in Fig. 11C, the distance from the target object S3 is derived to be 3.8 m and the distance from the target object S4 is derived to be 4.5 m from the vertical axis of the graph. The target object S4 is located between 300 and 400 and the target object S3 is located between 400 and 500 from the horizontal axis of the graph.

To reduce the effect of flare, the number of light sources for radiation during flashing may be reduced. More specifically, the number of light sources for radiation during flashing may be smaller than the number of light sources for radiation during scanning. The number of light sources for radiation during flashing may be one.

The number of light sources for radiation during flashing is an example of the number of the predetermined light sources. The number of light sources for radiation during scanning is an example of the number of the at least partial light sources.

Description is made about an example of calculation for reducing the effect of the displacement on the result of the first lighting state based on the result of the second lighting state. This calculation is implemented by a process of the CPU 81. The CPU 81 is an example of a calculator.

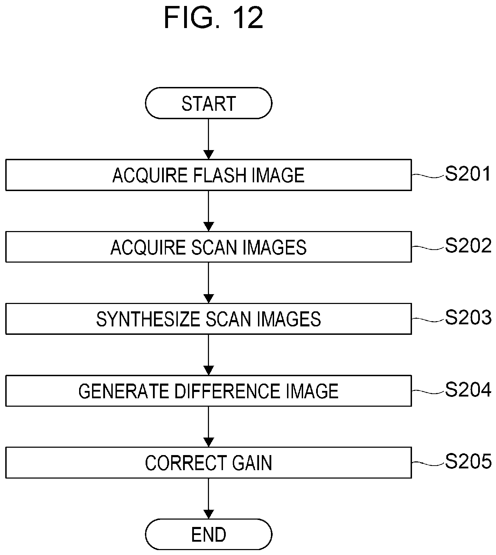

Fig. 12 is a flowchart illustrating the example of the calculation.

In the calculation example illustrated in Fig. 12, a flash image is acquired (Step S201), and 12 scan images are acquired (Step S202). Then, the 12 scan images are synthesized (Step S203). Thus, one synthesized scan image is acquired.

A difference image is generated by subtracting the charge amount of the synthesized scan image from the charge amount of the flash image (Step S204). The difference image shows the region 401 (see Fig. 9B) that is not irradiated during the scanning.

A gain of the synthesized scan image is corrected by multiplying the charge amount of the synthesized scan image by the charge amount of the difference image (Step S205). In the multiplication, the charge amount of the difference image may be used directly, or the charge amount of the difference image multiplied by a coefficient may be used.

Thus, the effect of the region 401 (see Fig. 9B) may be reduced and the distance measurement deviation may be reduced.

The correction data may be acquired at a predetermined timing during setup or distance measurement. Until then, pre-update data may be used as a correction value.

### <Lighting Modes of Light Sources 410 to 440>

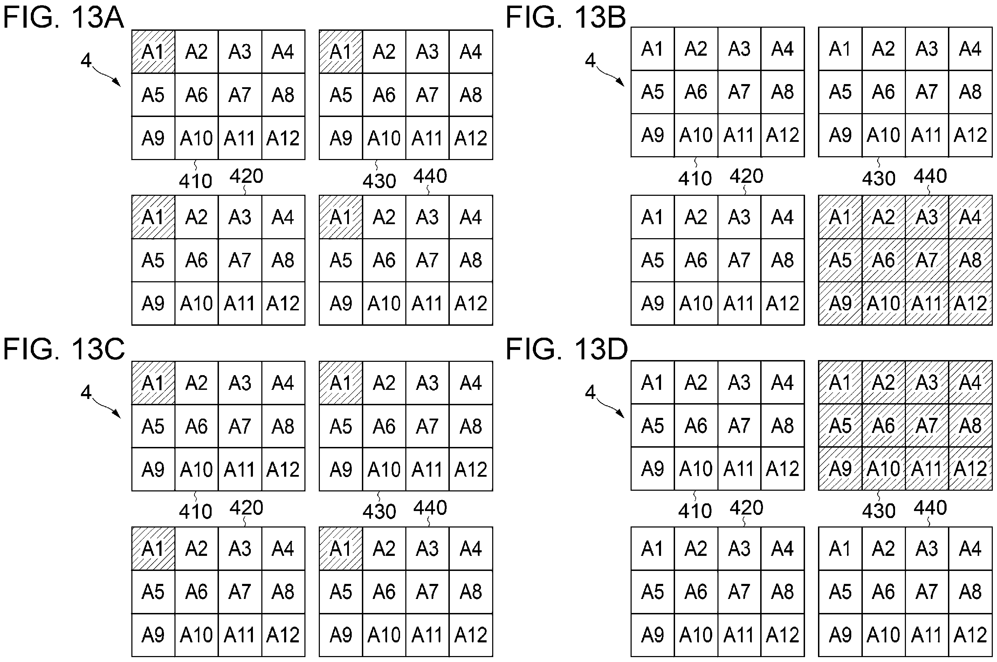

Figs. 13A to 13D illustrate lighting modes of the plurality of light sources 410 to 440 according to a modification. Figs. 13A and 13B illustrate a first lighting mode. Figs. 13C and 13D illustrate a second lighting mode. Figs. 13A and 13B are the same as Figs. 8A and 8B.

Figs. 13A and 13C illustrate the scanning. Figs. 13B and 13D illustrate the flashing. The lighting mode during the scanning is the same between the first lighting mode and the second lighting mode. The lighting mode during the flashing is different between the first lighting mode and the second lighting mode.

In Fig. 13B, the light source 440 out of the plurality of light sources 410 to 440 is lit. In Fig. 13D, the light source 430 is lit.

When the light source 440 is lit during the flashing, the light source 430 is not lit. When the light source 430 is lit during the flashing, the light source 440 is not lit. In this case, the light sources 430 and 440 are an example of the predetermined light source. The light source 430 is an example of a first light source. The light source 440 is an example of a second light source.

By alternately setting the first lighting mode and the second lighting mode, the number of flashing operations of the light source 440 may be reduced. Therefore, the temperature rise of the light source 440 may be suppressed compared with the case where only the light source 440 flashes.

A lighting mode other than the two lighting modes that are the first lighting mode and the second lighting mode may be employed. For example, the plurality of light sources 410 to 440 may be lit in a predetermined sequence during the flashing.

### <Various Control Modifications>

In the processing example illustrated in Fig. 10, the scan images are acquired after the flash image is acquired, but the acquisition is not limited thereto. In one modification, the flash image may be acquired after the scan images are acquired. The flash image may be acquired during the sequential acquisition of the scan images in the light emitting sections A1 to A12. For example, the flash image may be acquired after the scan image is acquired by lighting the light emitting section A6 and before the scan image is acquired by lighting the light emitting section A7.

In another modification, the acquisition is not limited to the case where the scan images in the light emitting sections A1 to A12 are acquired once while the flash image is acquired once. For example, the scan images may be acquired multiple times such as three times while the flash image is acquired once.

In another modification, control may be performed so that Steps 101 to 103 for acquiring the flash image are performed when a predetermined condition is satisfied, and are not performed when the predetermined condition is not satisfied.

When the predetermined condition is not satisfied, Steps 101 to 103 are not performed even if the scan image has the region 401 (e.g., Fig. 9A) that is not irradiated during the scanning.

The predetermined condition is that distance measurement is to be performed on the target object in the irradiation plane 60, regardless of whether the scan image has the region 401 (e.g., Fig. 9A) that is not irradiated during the scanning.

More specifically, the predetermined condition is satisfied when distance measurement is to be performed on the target object in the irradiation plane 60.

The predetermined condition is not satisfied when only detection is to be made as to whether the target object is present in the irradiation plane 60, and distance measurement is not to be performed on the target object. When distance measurement is not to be performed and detection is to be made as to whether the target object is present, the effect of the region 401 on the distance measurement result is small. Therefore, the light emitting sections A1 to A12 of the light source 440 are not lit (Step S101).

Thus, when the predetermined condition is satisfied, the scan images and the flash image are acquired. When the predetermined condition is not satisfied, the scan images are acquired but the flash image is not acquired.

Accordingly, the processing period may be reduced when detection is to be made as to whether the target object is present.

### <Second Exemplary Embodiment>

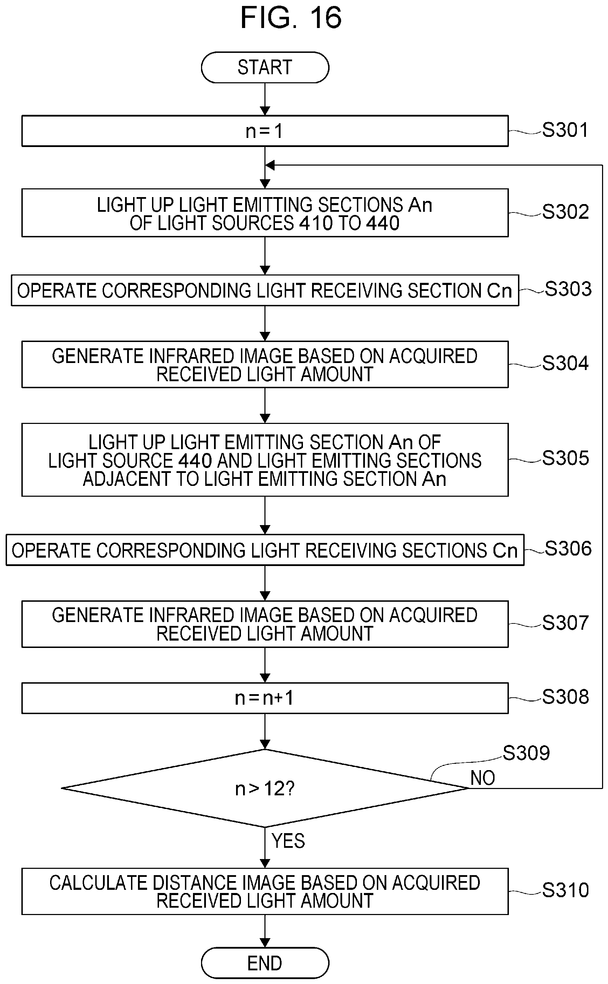

The second exemplary embodiment is described with reference to Figs. 14A to 16. Figs. 14A to 15B correspond to Figs. 8A to 9B illustrating the first exemplary embodiment. Fig. 16 corresponds to Fig. 10 illustrating the first exemplary embodiment. In the description with reference to Figs. 14A to 16, the details described with reference to Figs. 8A to 10 may be omitted.

Figs. 14A and 14B illustrate lighting states of the light sources 410 to 440 according to the second exemplary embodiment. Fig. 14A illustrates a state in which the single light emitting section A1 is lit. Fig. 14B illustrates a state in which the plurality of light emitting sections A1, A2, A5, and A6 is lit.

In the lighting state illustrated in Fig. 14A, the light emitting sections A1 of the light sources 410 to 440 are lit. That is, all of the four light sources 410 to 440 are lit (quadruple lighting). The single light emitting section A1 is lit, and the other light emitting sections A2 to A12 are not lit. In this regard, the second exemplary embodiment is the same as the first exemplary embodiment (see Figs. 8A and 8B).

In the lighting state illustrated in Fig. 14B, the light source 440 out of the light sources 410 to 440 is lit. That is, the single light source 440 out of the four light sources 410 to 440 is lit, and the other light sources 410 to 430 are not lit (single lighting). In the light source 440, the light emitting sections A1, A2, A5, and A6 out of the light emitting sections A1 to A12 are lit, and the other light emitting sections A3, A4, and A7 to A12 are not lit. In this regard, the second exemplary embodiment is different from the first exemplary embodiment (see Figs. 8A and 8B) in which the light emitting sections A1 to A12 are lit.

The light emitting sections A1, A2, A5, and A6 of the light source 440 are an example of a plurality of light emitting sections that is lit in the second lighting state in the predetermined light source.

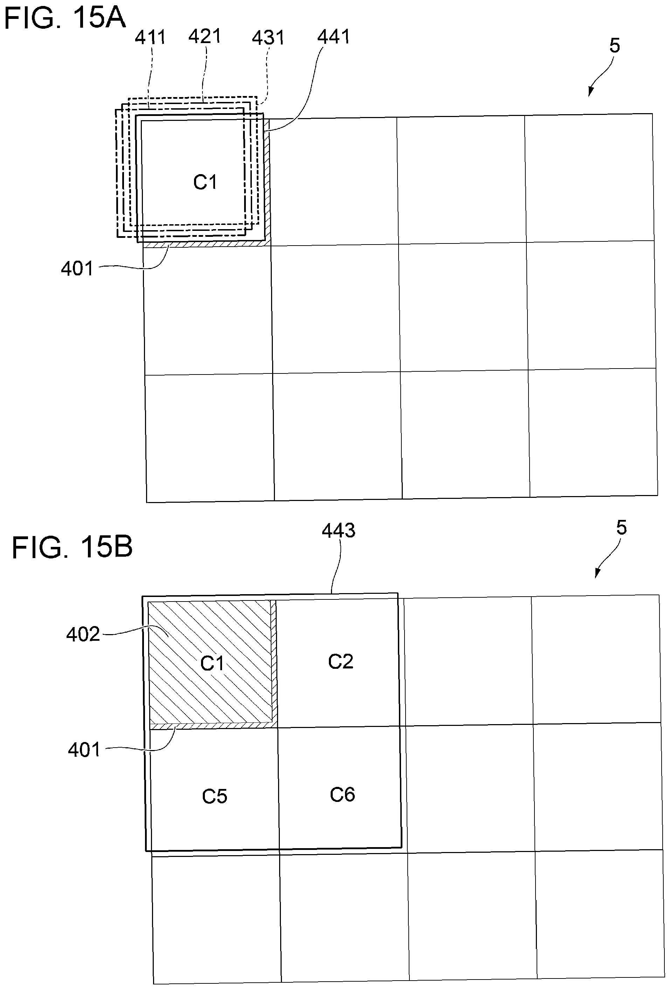

Figs. 15A and 15B illustrate light amount distributions in the light receiving sections of the light receiver 5 that receives light from the plurality of light sources 410 to 440. Fig. 15A illustrates a lighting state corresponding to that in Fig. 14A. Fig. 15B illustrates a lighting state corresponding to that in Fig. 14B.

Although Figs. 15A and 15B illustrate the light receiving section C1 etc., they may be regarded as the irradiation section B1 (see Fig. 4) etc. In this case, the irradiation section B1 is an example of the one region, and the irradiation sections B2, B5, and B6 corresponding to the light receiving sections C2, C5, and C6 are an example of the region adjacent to the one region. The regions 411 to 431 described later are an example of the radiation range of the first light emitting section of the other light source. The region 441 is an example of the radiation range of the first light emitting section of the partial light source.

In the example illustrated in Fig. 15A, the light from the light sources 410 to 440 (e.g., Figs. 14A and 14B) is received while being displaced to the upper left side relative to the light receiving section C1 due to the assembling variations etc. The light from the light source 410 is in the region 411 indicated by the two-dot chain line. The light from the light source 420 is in the region 421 indicated by the chain line. The light from the light source 430 is in the region 431 indicated by the broken line. The light from the light source 440 is in the region 441 indicated by the solid line.

The light receiving section C1 has the region 401 (hatched with the upward diagonal lines) that is not exposed to any light beams from the light sources 410 to 440.

In the example illustrated in Fig. 15B, the region 401 of the light receiving section C1 is irradiated with the light from the light emitting sections A2, A5, and A6 of the light source 440 (see Fig. 14B).

The region 401 of the light receiving section C1 is an example of the non-irradiation portion other than the portion of the one region that is irradiated by the first light emitting section.

In the example illustrated in Fig. 15B, the light from the light source 440 is in a region 443 indicated by a solid line. The light receiving sections C2, C5, and C6 located around the light receiving section C1 as well as the light receiving section C1 are exposed to the light from the light source 440. That is, the light from the light source 440 is received by the entire light receiving section C1. Therefore, the region 401 is exposed to the light from the light source 440.

Fig. 16 is a flowchart illustrating an example of control along with lighting of the light sources 410 to 440. Fig. 16 corresponds to Fig. 10 illustrating the first exemplary embodiment.

In the control example illustrated in Fig. 16, the variable n is set to "1" (Step S301). Then, light emitting sections An of the light sources 410 to 440 are lit (Step S302). In this case, the light emitting sections A1 of the light sources 410 to 440 are lit (see Fig. 14A).

A corresponding light receiving section Cn is operated (Step S303). In this case, the light receiving section C1 (see Fig. 15A) is operated. Thus, an infrared image 100 (see Fig. 6C) during the lighting of the light emitting sections A1 is generated as a scan image based on the acquired received light amount (Step S304).

The light emitting section An of the light source 440 and the light emitting sections adjacent to the light emitting section An are lit (Step S305). In this case, the light emitting section A1 and the light emitting sections A2, A5, and A6 adjacent thereto are lit (see Fig. 14B).

Corresponding light receiving sections Cn are operated (Step S306). In this case, the light receiving section C1 and the light receiving sections C2, C5, and C6 are operated (see Fig. 15B). Thus, an infrared image 100 (see Fig. 6C) during the lighting of the light emitting section A1 is generated as a flash image based on the acquired received light amount (Step S307).

A value "1" is added to the variable n (Step S308). Determination is made as to whether the variable n has exceeded "12" (Step S309). When the variable n has not exceeded "12" (NO in Step S309), the process returns to Step S302. For example, when the variable n is "2," the light emitting sections A2 of the light sources 410 to 440 and the adjacent light emitting sections A1, A3, and A5 to A7 are lit (e.g., Fig. 14A). Until the variable n changes from "3" to "12," the light emitting sections An of the light sources 410 to 440 and the adjacent light emitting sections are lit and the corresponding light receiving sections Cn are operated. Thus, the scan images and the corresponding flash images may be acquired sequentially.

When the variable n has exceeded "12" (YES in Step S309), a distance image is calculated based on the acquired received light amount (Step S310). Then, the process is terminated.

### <Various Lighting Patterns of Light Sources 410 to 440>

In the lighting pattern of the first exemplary embodiment, the single light emitting sections An (n is "1" to "12") of the light sources 410 to 440 are lit during the scanning, and the light emitting sections A1 to A12 of the single light source 440 out of the light sources 410 to 440 are lit during the flashing (see Figs. 8A and 8B). In the lighting pattern of the second exemplary embodiment, the single light emitting sections An (n is "1" to "12") of the light sources 410 to 440 are lit during the scanning, and the light emitting section An of the light source 440 and the light emitting sections adjacent to the light emitting section An are lit during the flashing (see Figs. 14A and 14B).

The lighting pattern is not limited to these lighting patterns. Various modifications of the lighting pattern are described.

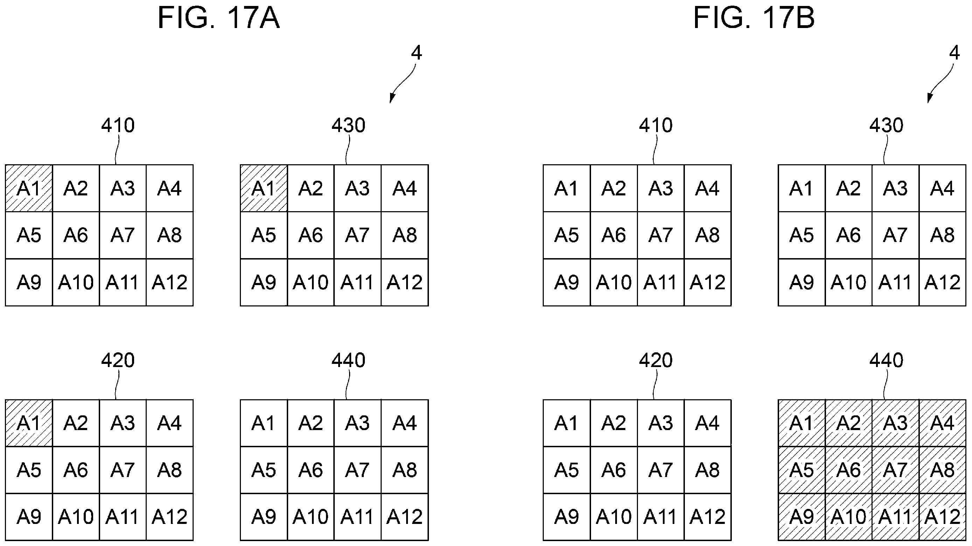

Figs. 17A and 17B illustrate a first modification of the lighting pattern. Fig. 17A illustrates a scan-lighting state. Fig. 17B illustrates a flash-lighting state.

In the lighting state illustrated in Fig. 17A in the first modification, the light emitting sections A1 of the light sources 410 to 430 are lit. That is, three light sources 410 to 430 out of the four light sources 410 to 440 are lit, and the light source 440 is not lit (triple lighting). In this regard, the first modification is different from the first exemplary embodiment (see Figs. 8A and 8B) in which all of the four light sources 410 to 440 are lit.

In the first modification illustrated in Fig. 17A, the single light emitting section A1 out of the light emitting sections A1 to A12 is lit, and the other light emitting sections A2 to A12 are not lit. In this regard, the first modification is the same as the first exemplary embodiment (see Figs. 8A and 8B).

In the lighting state illustrated in Fig. 17B in the first modification, the light source 440 out of the light sources 410 to 440 is lit. That is, the single light source 440 out of the four light sources 410 to 440 is lit, and the other light sources 410 to 430 are not lit (single lighting). In the light source 440, the light emitting sections A1 to A12 are lit.

In this regard, the first modification is the same as the first exemplary embodiment (see Figs. 8A and 8B).

More specifically, the single light emitting sections A1 of the light sources 410 to 430 out of the light sources 410 to 440 emit light during the scanning illustrated in Fig. 17A. The light source 440 does not emit light during the scanning.

The light emitting sections A1 to A12 of the light source 440 out of the light sources 410 to 440 emit light during the flashing illustrated in Fig. 17B. The light sources 410 to 430 do not emit light during the flashing.

In this way, in the first modification, the light sources 410 to 430 out of the light sources 410 to 440 emit light during the scanning, and the light source 440 emits light during the flashing.

By controlling the light source 440 not to emit light during the scanning in the first modification, the temperature of the light source 440 that has risen by light emission during the flashing may be reduced during the scanning.

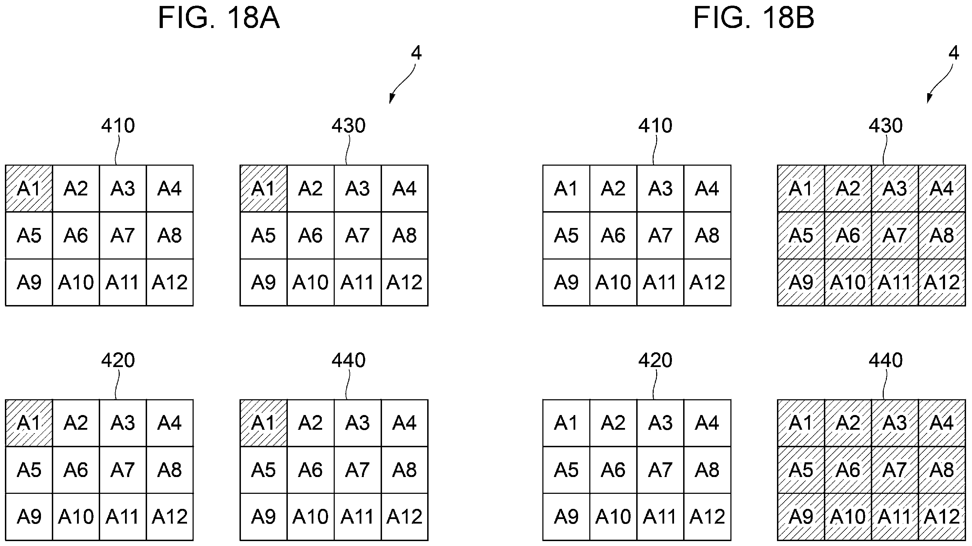

Figs. 18A and 18B illustrate a second modification of the lighting pattern. Fig. 18A illustrates a scan-lighting state. Fig. 18B illustrates a flash-lighting state.

During the scanning illustrated in Fig. 18A in the second modification, the light emitting sections A1 of the light sources 410 to 440 are lit. In this regard, the second modification is the same as the first exemplary embodiment (see Figs. 8A and 8B) in which all of the four light sources 410 to 440 are lit.

During the flashing illustrated in Fig. 18B in the second modification, the light sources 430 and 440 out of the light sources 410 to 440 are lit (double lighting). In this regard, the second modification is different from the first exemplary embodiment (see Figs. 8A and 8B) in which the single light source 440 is lit.

Since the two light sources are lit during the flashing in the second modification, light may be radiated and distance measurement may be performed even if the irradiation plane 60 (see Fig. 2) is located at a distance compared with the first exemplary embodiment.

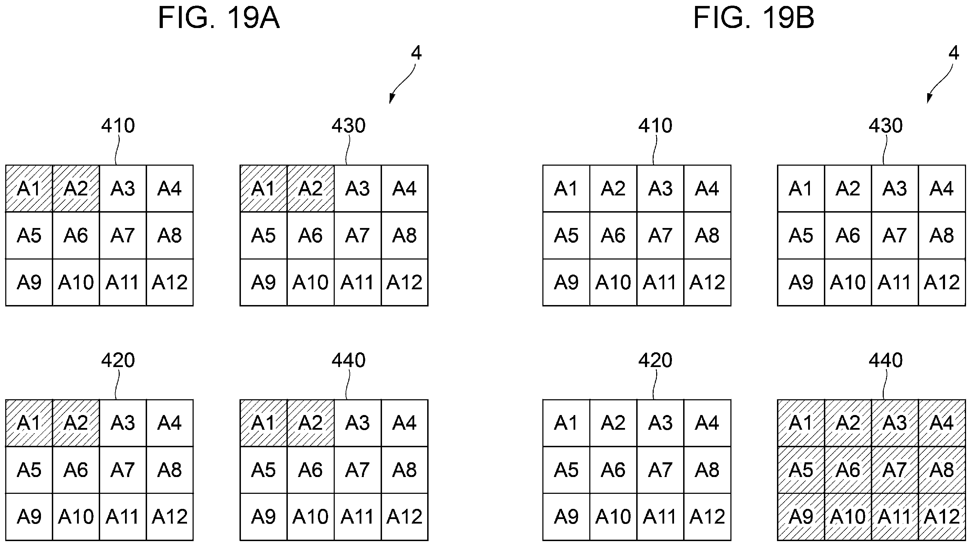

Figs. 19A and 19B illustrate a third modification of the lighting pattern. Fig. 19A illustrates a scan-lighting state. Fig. 19B illustrates a flash-lighting state.

During the scanning illustrated in Fig. 19A in the third modification, the light emitting sections A1 and A2 of the light sources 410 to 440 are lit. In this regard, the third modification is different from the first exemplary embodiment (see Figs. 8A and 8B) in which the single light emitting sections of the light sources 410 to 440 are lit.

That is, during the scanning, the light emitting sections A3 and A4 emit light after the light emitting sections A1 and A2 emit light. Similarly, the light emitting sections A5 and A6, the light emitting sections A7 and A8, the light emitting sections A9 and A10, and the light emitting sections A11 and A12 are lit in this sequence.

During the flashing illustrated in Fig. 19B in the third modification, the light source 440 out of the light sources 410 to 440 is lit (single lighting). In this regard, the third modification is the same as the first exemplary embodiment (see Figs. 8A and 8B).

Since the two light emitting sections are lit during the scanning in the third modification, the scanning period may be made shorter than in the first exemplary embodiment.

### <Third Exemplary Embodiment>

Description is made about the third exemplary embodiment in which the light emitter 4 includes light sources 410 and 420 having different radiation angles.

Fig. 20 illustrates the radiation angles of the light sources 410 and 420 of the light emitter 4. Fig. 20 illustrates a configuration example in which the light emitter 4 includes two light sources 410 and 420. Fig. 20 illustrates a configuration example in which each of the light sources 410 and 420 is divided into light emitting sections A1 and A2. The light emitting sections A1 are lit.

The radiation angle of the light source 410 is θ1. The radiation angle of the light source 420 is θ2. The radiation angle θ1 is different from the radiation angle θ2.

More specifically, the radiation angle of light emitted from the light emitting section A1 of the light source 410 is θ1, and the radiation angle of light emitted from the light emitting section A1 of the light source 420 is θ2. The radiation angle θ2 is larger than the radiation angle θ1 (θ2 > θ1). At the radiation angle θ2, light is diffused more greatly than at the radiation angle θ1.

Each of the radiation angles θ1 and θ2 is an angle indicating the degree of spread of light from the light emitting section A1, and is an angle under the assumption that the light intersects the vertical plane of the light emitting section A1.

The light emitting sections A2 to A12 (see Fig. 2) other than the light emitting section A1 in the light source 410 also have the radiation angle θ1. The light emitting sections A2 to A12 (see Fig. 2) other than the light emitting section A1 in the light source 420 also have the radiation angle θ2.

The radiation angle θ1 of the light source 410 is an example of the radiation angle of the other light source. The radiation angle θ2 of the light source 420 is an example of the radiation angle of the partial light source. In this case, the state in which the light emitting section A1 of the light source 410 is lit is an example of the first lighting state, and the state in which the light emitting section A1 of the light source 420 is lit is an example of the second lighting state.

In the example of Fig. 20, the light emitter 4 includes the two light sources 410 and 420, but is not limited thereto. The light emitter 4 may include three or four light sources. In this case, one or more light sources may have the radiation angle θ2.All of the plurality of light sources may have the radiation angle θ2.

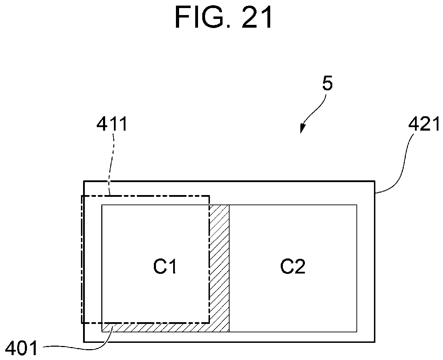

Fig. 21 illustrates a light amount distribution in the light receiving section C1 of the light receiver 5 that receives light from the plurality of light sources 410 and 420.

In the example illustrated in Fig. 21, the light from the light sources 410 and 420 (e.g., Fig. 20) is received while being displaced to the upper left side relative to the light receiving section C1 due to the assembling variations etc. That is, the light from the light source 410 is in the region 411 indicated by the two-dot chain line.

The light receiving section C1 has the region 401 (hatched with the upward diagonal lines) that is not exposed to the light from the light source 410.

The light from the light source 420 out of the plurality of light sources 410 and 420 is in the region 421 indicated by a solid line. The light receiving section C2 located near the light receiving section C1 as well as the light receiving section C1 is exposed to the light from the light source 420. That is, the light from the light source 420 is received by the entire light receiving section C1. Therefore, the region 401 is exposed to the light from the light source 420.

The region 421 is wider than the region 411.

The light receiving section C1 does not have a region that is not exposed to any light beams from the light sources 410 and 420 due to the assembling variations etc.

Description is made about examples of the configuration in which the radiation angle θ2 of the light source 420 is made different from the radiation angle θ1 of the light source 410.

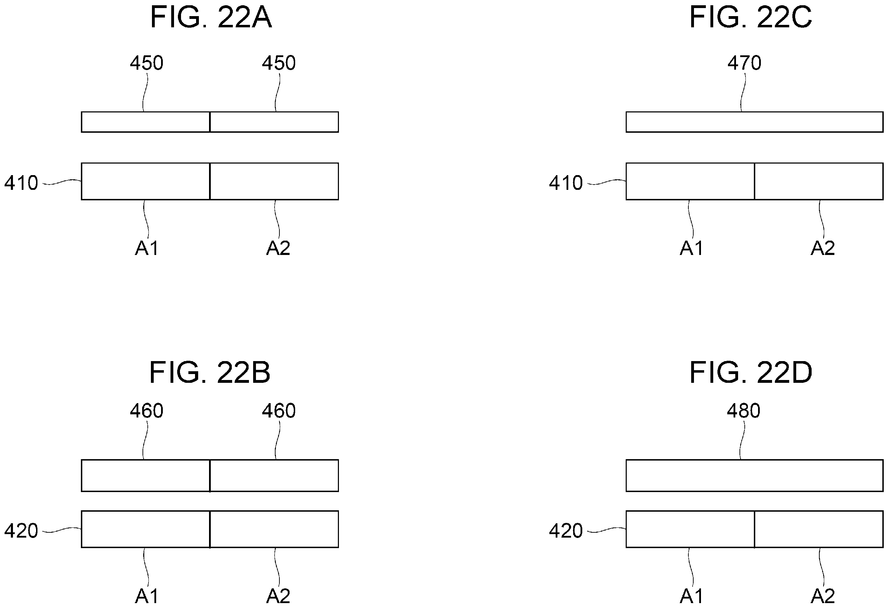

Figs. 22A to 22D illustrate configuration examples of the light sources 410 and 420 including optical members. Figs. 22A and 22B illustrate an example in which microlenses 450 and 460 are used as the optical members. Figs. 22C and 22D illustrate another example in which lenses 470 and 480 are used as the optical members. Figs. 22A to 22D illustrate configuration examples in the case where each of the light sources 410 and 420 has the light emitting sections A1 and A2. Description is omitted, for example, for the case where each of the light sources 410 and 420 has the light emitting sections A1 to A12 because the other light emitting sections A3 to A12 may have the same configuration. The light sources 410 and 420 emit light upward in Figs. 22A to 22D.

In the configuration example illustrated in Figs. 22A and 22B, the microlenses are provided individually to the light emitting sections A1 and A2 of each of the light sources 410 and 420. As illustrated in Fig. 22A, the microlenses 450 are provided individually to the light emitting sections A1 and A2 of the light source 410. As illustrated in Fig. 22B, the microlenses 460 are provided individually to the light emitting sections A1 and A2 of the light source 420. Thus, the number of light emitting sections and the number of microlenses 450 are the same in the light source 410. The number of light emitting sections and the number of microlenses 460 are the same in the light source 420.

The microlens 450 of the light source 410 has an optical characteristic to achieve the radiation angle θ1 (see Fig. 20). The microlens 460 of the light source 420 has an optical characteristic to achieve the radiation angle θ2 (see Fig. 20).

If the light sources 410 and 420 have predetermined radiation angles per se, the radiation angles θ1 and θ2 are achieved in combination with the radiation angles of the microlenses 450 and 460.

The predetermined radiation angles of the light sources 410 and 420 are further described.

The radiation angles are set to predetermined angles by, for example, changing the apertures of the light emitting elements of the light sources 410 and 420.

Although illustration is omitted, if a plurality of light sources has the radiation angle θ1 (see Fig. 20), the predetermined radiation angles may be the same among all of the plurality of light sources or may be the same among the partial light sources. In the latter case, the predetermined radiation angle of the other light source than the partial light source is different from the predetermined radiation angle of the partial light source.

In the other configuration example illustrated in Figs. 22C and 22D, a single lens is provided over the light emitting sections A1 and A2 of each of the light sources 410 and 420. As illustrated in Fig. 22C, the same lens 470 is provided over the light emitting sections A1 and A2 of the light source 410. As illustrated in Fig. 22D, the same lens 480 is provided over the light emitting sections A1 and A2 of the light source 420.

In the light source 410, the single lens 470 is provided to the plurality of light emitting sections A1 and A2. In the light source 420, the single lens 480 is provided to the plurality of light emitting sections A1 and A2. Thus, the number of lenses 470 is smaller than the number of light emitting sections A1 and A2 in the light source 410. The number of lenses 480 is smaller than the number of light emitting sections A1 and A2 in the light source 420.

In another configuration example, if each of the light sources 410 and 420 has the light emitting sections A1 to A12 (see Fig. 2), the single lens 470 or 480 may be provided to the light emitting sections A1 to A12.

The lens 470 of the light source 410 has an optical characteristic to achieve the radiation angle θ1 (see Fig. 20). The lens 480 of the light source 420 has an optical characteristic to achieve the radiation angle θ2 (see Fig. 20).

If the light sources 410 and 420 have predetermined radiation angles per se, the radiation angles θ1 and θ2 are achieved in combination with the radiation angles of the lenses 470 and 480. The predetermined radiation angles of the light sources 410 and 420 are similar to those in the case of Figs. 22A and 22B, and description thereof is omitted.

As described above, the light source 420 includes the microlens 460 or the lens 480 with which the radiation angle becomes larger than the radiation angle of the light source 410. The microlenses 450 and 460 and the lenses 470 and 480 are an example of the optical member.

Focus is placed on the combination of the light emitting sections A1 and A2 of the light sources 410 and 420 and the microlenses 450 and 460 or the lenses 470 and 480 to achieve the radiation angles θ1 and θ2. At least either of the light emitting sections A1 and A2 of the plurality of light sources 410 and 420 and the microlenses 450 and 460 or the lenses 470 and 480 that allow the light from the light emitting sections A1 and A2 to pass may be the same. When the predetermined radiation angles of the plurality of light sources 410 and 420 are the same, the number of components may be reduced compared with a case where the predetermined radiation angles of the plurality of light sources 410 and 420 are different. When the microlenses 450 and 460 or the lenses 470 and 480 are the same, the number of components may be reduced.

### (Light Emitting Device 2 and Distance Measuring Device 1)

The light emitting device 2 indicated by the broken line in Fig. 1 includes the light emitter 4, the light emission driver 6, and the controller 8. The light emitting device 2 is an example of a light emitting device including: the light emitter 4 including the plurality of light sources 410 to 440 each having the plurality of light emitting sections A1 to A12 configured to emit light individually; and the driver 6 configured to drive the light emitter 4 to have the first lighting state in which the first light emitting sections A1 that radiate light toward the one region B1 in the at least partial light sources 410 to 430 out of the plurality of light sources 410 to 440 are lit, and to have the second lighting state in which the plurality of light emitting sections A1 to A12 of the predetermined light source 440 out of the plurality of light sources 410 to 440, including the first light emitting section A1 and the second light emitting sections A2, A5, and A6 that radiate light toward the non-irradiation portion 401 other than the portion 402 of the one region B1 that is irradiated by the first light emitting section A1, is lit simultaneously.

The light emitting device 2 indicated by the broken line in Fig. 1 is an example of a light emitting device including: the light emitter 4 including the plurality of light sources 410 to 440 each having the plurality of light emitting sections A1 to A12 configured to emit light individually; and the processor exemplified by the CPU 81. The processor is configured to drive the light emitter 4 to have the first lighting state in which the first light emitting sections A1 that radiate light toward the one region B1 in the at least partial light sources 410 to 430 out of the plurality of light sources 410 to 440 are lit, and to have the second lighting state in which the plurality of light emitting sections A1 to A12 of the predetermined light source 440 out of the plurality of light sources 410 to 440, including the first light emitting section A1 and the second light emitting sections A2, A5, and A6 that radiate light toward the non-irradiation portion 401 other than the portion 402 of the one region B1 that is irradiated by the first light emitting section A1, is lit simultaneously.

The light emitting device including the light emitter 4 in Fig. 20 is an example of a light emitting device including: the light emitter 4 including the plurality of light sources each having the plurality of light emitting sections A1 to A12 configured to emit light individually, the plurality of light sources 410 to 440 including the partial light source 420 having the radiation angle θ2 larger than the radiation angle θ1 of the other light source 410; and the driver 6 configured to drive the light emitter 4 to have the first lighting state in which the first light emitting section A1 that radiates light toward the one region B1 in the other light source 410 is lit, and to have the second lighting state in which at least the first light emitting section A1 of the partial light source 420 is lit.

The distance measuring device 1 illustrated in Fig. 1 is an example of a distance measuring device including: the light emitting device 2; the light receiver 5 configured to receive reflected light originating from the light emitting device 2; the acquirer 5 configured to acquire a light reception result from the light receiver 5; and the distance measurer 8 configured to measure a distance based on the light reception result acquired by the acquirer 5. The light receiver 5 is an example of the light receiver, and is an example of the acquirer. The CPU 81 of the controller 8 that implements the distance measuring function is an example of the distance measurer.

The exemplary embodiments of the present disclosure are also applicable to a program and a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### <Appendix>

(((1))) A light emitting device comprising:
   a light emitter including a plurality of light sources each having a plurality of light emitting sections configured to emit light individually; and
   a driver configured to drive the light emitter to have a first lighting state in which first light emitting sections that radiate light toward one region in at least partial light sources out of the plurality of light sources are lit, and to have a second lighting state in which a plurality of light emitting sections of a predetermined light source out of the plurality of light sources, including the first light emitting section and a second light emitting section that radiates light toward a non-irradiation portion other than a portion of the one region that is irradiated by the first light emitting section, is lit simultaneously.
(((2))) The light emitting device according to (((1))), further comprising a calculator configured to acquire a result of the second lighting state, and perform calculation based on the acquired result to reduce an effect of the non-irradiation portion in the first lighting state.
(((3))) The light emitting device according to (((1))) or (((2))), wherein the number of the predetermined light sources is smaller than the number of the at least partial light sources.
(((4))) The light emitting device according to (((3))), wherein the number of the predetermined light sources is one.
(((5))) The light emitting device according to any one of (((1))) to (((4))), wherein
   each of the plurality of light sources includes the light emitting sections and an optical member configured to allow the light from the light emitting sections to pass, and
   at least either of the light emitting sections and the optical members of the plurality of light sources are the same.
(((6))) The light emitting device according to any one of (((1))) to (((4))), wherein the driver is configured to switch drive of the light emitter to have the first lighting state and the second lighting state and drive of the light emitter to have the first lighting state and not to have the second lighting state.
(((7))) The light emitting device according to any one of (((1))) to (((4))), wherein
   the predetermined light source is a plurality of light sources including a first light source and a second light source,
   when the first light source is in the second lighting state, the second light source is not in the second lighting state, and
   when the second light source is in the second lighting state, the first light source is not in the second lighting state.
(((8))) The light emitting device according to any one of (((1))) to (((4))), wherein the plurality of light emitting sections of the predetermined light source that is lit in the second lighting state is part of the light emitting sections of the predetermined light source.
(((9))) The light emitting device according to (((1))) or (((2))), wherein
   the one region is one of divisional regions constituting a region to be irradiated by the light emitter, and
   the number of times the driver drives the divisional regions to have the first lighting state is equal to or larger than the number of times the driver drives the divisional regions to have the second lighting state.
(((10))) The light emitting device according (((9))), wherein the divisional regions are driven once to have the second lighting state while each of the divisional regions is driven once to have the first lighting state.
(((11))) A light emitting device comprising:
   a light emitter including a plurality of light sources each having a plurality of light emitting sections configured to emit light individually; and
   a processor configured to drive the light emitter to have a first lighting state in which first light emitting sections that radiate light toward one region in at least partial light sources out of the plurality of light sources are lit, and to have a second lighting state in which a plurality of light emitting sections of a predetermined light source out of the plurality of light sources, including the first light emitting section and a second light emitting section that radiates light toward a non-irradiation portion other than a portion of the one region that is irradiated by the first light emitting section, is lit simultaneously.
(((12))) A light emitting device comprising:
   a light emitter including a plurality of light sources each having a plurality of light emitting sections configured to emit light individually, the plurality of light sources including a partial light source having a radiation angle larger than a radiation angle of another light source; and
   a driver configured to drive the light emitter to have a first lighting state in which a first light emitting section that radiates light toward one region in the other light source is lit, and to have a second lighting state in which at least the first light emitting section of the partial light source is lit.
(((13))) A distance measuring device comprising:
   the light emitting device according to (((1))), (((11))), or (((12)));
   a light receiver configured to receive reflected light originating from the light emitting device;
   an acquirer configured to acquire a light reception result from the light receiver; and
   a distance measurer configured to measure a distance based on the light reception result acquired by the acquirer.

According to (((1))), an effect of displacement of the plurality of light sources on the one region may be reduced compared with a case of drive for a lighting state in which the one region alone is irradiated.

According to (((2))), an effect of flare caused by a high-reflectance object may be reduced more securely than in a case without the calculator configured to acquire the result of the second lighting state and perform the calculation based on the acquired result to reduce the effect of the non-irradiation portion in the first lighting state.

According to (((3))), the effect of flare caused by the high-reflectance object may be reduced more securely than in a case without the configuration in which the number of the predetermined light sources is smaller than the number of the at least partial light sources.

According to (((4))), the effect of flare caused by the high-reflectance object may be reduced more securely than in a case without the configuration in which the number of the predetermined light sources is one.

According to (((5))), the number of components may be reduced compared with a case without the configuration in which each of the plurality of light sources includes the light emitting sections and the optical member configured to allow the light from the light emitting sections to pass and at least either of the light emitting sections and the optical members of the plurality of light sources are the same.

According to (((6))), the versatility may be increased compared with a case without the configuration in which the driver is configured to switch the drive of the light emitter to have the first lighting state and the second lighting state and the drive of the light emitter to have the first lighting state and not to have the second lighting state.

According to (((7))), the temperature rise of the light source along with the second lighting state may be suppressed compared with a case without the configuration in which the predetermined light source is the plurality of light sources including the first light source and the second light source, when the first light source is in the second lighting state, the second light source is not in the second lighting state, and when the second light source is in the second lighting state, the first light source is not in the second lighting state.

According to (((8))), the temperature rise of the light source along with the second lighting state may be suppressed compared with a case without the configuration in which the plurality of light emitting sections of the predetermined light source that is lit in the second lighting state is part of the light emitting sections of the predetermined light source.

According to (((9))), the control load may be reduced compared with a case without the configuration in which the one region is one of the divisional regions constituting the region to be irradiated by the light emitter and the number of times the driver drives the divisional regions to have the first lighting state is equal to or larger than the number of times the driver drives the divisional regions to have the second lighting state.

According to (((10))), the control load may be reduced compared with a case without the configuration in which the divisional regions are driven once to have the second lighting state while each of the divisional regions is driven once to have the first lighting state.

According to (((11))), the effect of displacement of the plurality of light sources on the one region may be reduced compared with the case of drive for the lighting state in which the one region alone is irradiated.

According to (((12))), the effect of displacement of the plurality of light sources on the one region may be reduced compared with the case of drive for the lighting state in which the one region alone is irradiated.

According to (((13))), the effect of displacement of the plurality of light sources on the one region may be reduced compared with the case of drive for the lighting state in which the one region alone is irradiated.

## Claims

1. A light emitting device comprising:
a light emitter including a plurality of light sources each having a plurality of light emitting sections configured to emit light individually; and
a driver configured to drive the light emitter to have a first lighting state in which first light emitting sections that radiate light toward one region in at least partial light sources out of the plurality of light sources are lit, and to have a second lighting state in which a plurality of light emitting sections of a predetermined light source out of the plurality of light sources, including the first light emitting section and a second light emitting section that radiates light toward a non-irradiation portion other than a portion of the one region that is irradiated by the first light emitting section, is lit simultaneously.

2. The light emitting device according to claim 1, further comprising a calculator configured to acquire a result of the second lighting state, and perform calculation based on the acquired result to reduce an effect of the non-irradiation portion in the first lighting state.

3. The light emitting device according to claim 1 or 2, wherein the number of the predetermined light sources is smaller than the number of the at least partial light sources.

4. The light emitting device according to claim 3, wherein the number of the predetermined light sources is one.

5. The light emitting device according to any one of claims 1 to 4, wherein:
each of the plurality of light sources includes the light emitting sections and an optical member configured to allow the light from the light emitting sections to pass; and
at least either of the light emitting sections and the optical members of the plurality of light sources are the same.

6. The light emitting device according to any one of claims 1 to 4, wherein the driver is configured to switch drive of the light emitter to have the first lighting state and the second lighting state and drive of the light emitter to have the first lighting state and not to have the second lighting state.

7. The light emitting device according to any one of claims 1 to 4, wherein:
the predetermined light source is a plurality of light sources including a first light source and a second light source;
when the first light source is in the second lighting state, the second light source is not in the second lighting state; and
when the second light source is in the second lighting state, the first light source is not in the second lighting state.

8. The light emitting device according to any one of claims 1 to 4, wherein the plurality of light emitting sections of the predetermined light source that is lit in the second lighting state is part of the light emitting sections of the predetermined light source.

9. The light emitting device according to claim 1 or 2, wherein:
the one region is one of divisional regions constituting a region to be irradiated by the light emitter; and
the number of times the driver drives the divisional regions to have the first lighting state is equal to or larger than the number of times the driver drives the divisional regions to have the second lighting state.

10. The light emitting device according claim 9, wherein the divisional regions are driven once to have the second lighting state while each of the divisional regions is driven once to have the first lighting state.

11. A light emitting device comprising:
a light emitter including a plurality of light sources each having a plurality of light emitting sections configured to emit light individually; and
a processor configured to drive the light emitter to have a first lighting state in which first light emitting sections that radiate light toward one region in at least partial light sources out of the plurality of light sources are lit, and to have a second lighting state in which a plurality of light emitting sections of a predetermined light source out of the plurality of light sources, including the first light emitting section and a second light emitting section that radiates light toward a non-irradiation portion other than a portion of the one region that is irradiated by the first light emitting section, is lit simultaneously.

12. A light emitting device comprising:
a light emitter including a plurality of light sources each having a plurality of light emitting sections configured to emit light individually, the plurality of light sources including a partial light source having a radiation angle larger than a radiation angle of another light source; and
a driver configured to drive the light emitter to have a first lighting state in which a first light emitting section that radiates light toward one region in the other light source is lit, and to have a second lighting state in which at least the first light emitting section of the partial light source is lit.

13. A distance measuring device comprising:
the light emitting device according to claim 1, 11, or 12;
a light receiver configured to receive reflected light originating from the light emitting device;
an acquirer configured to acquire a light reception result from the light receiver; and
a distance measurer configured to measure a distance based on the light reception result acquired by the acquirer.
